(19) Europäisches Patentamt

**European Patent Office**

Office européen des brevets

(11) Veröffentlichungsnummer: **0 284 805 B1**

(12) **EUROPÄISCHE PATENTSCHRIFT**

(45) Veröffentlichungstag der Patentschrift: **06.11.91**

(21) Anmeldenummer: **88103217.1**

(22) Anmeldetag: **02.03.88**

(51) Int. Cl.5: **E03C 1/10**, F16K 15/14, F16K 24/06

(54) **Rohrunterbrecher.**

(30) Priorität: **02.03.87 DE 3706712 U**
**02.03.87 DE 3706737 U**

(43) Veröffentlichungstag der Anmeldung:
**05.10.88 Patentblatt 88/40**

(45) Bekanntmachung des Hinweises auf die
Patenterteilung:
**06.11.91 Patentblatt 91/45**

(84) Benannte Vertragsstaaten:
**AT CH DE FR LI**

(56) Entgegenhaltungen:
**US-A- 2 746 477**
**US-A- 4 582 081**

(73) Patentinhaber: **Schubert & Salzer GmbH & Co.**
**Ingolstadt-Armaturen KG**
**W-8070 Ingolstadt(DE)**

(72) Erfinder: **Lechermeier, Franz**
**Altenhofstrasse 15**
**W-8070 Ingolstadt(DE)**

EP 0 284 805 B1

## Beschreibung

Die vorliegende Erfindung betrifft einen Rohrunterbrecher, wie im Oberbegriff des ersten Anspruchs beschrieben und aus der US-A-2 746 477 bekannt, mit einem Gehäuse und mit einem mit der Zuflußseite in Verbindung stehenden Zuflußstutzen, der Zuflußöffnungen aufweist, mit Lufteintrittsöffnungen, die mit der Abflußseite in Verbindung stehen sowie mit einer Membran, die in Abhängigkeit vom Druckunterschied zwischen Zufluß- und Abflußseite die Lufteintrittsöffnungen verschließt oder freigibt und den Durchfluß steuert.

Gemäß DIN 3266, Teil 1, vom Juli 1986 ist für derartige Rohrunterbrecher mit beweglichem Teil vorgeschrieben, daß die Lufteintrittsöffnungen bei Nulldurchfluß offen sind, wodurch im Rohrinneren der atmosphärische Druck herrscht.

Aus dem US-P 4 582 081 ist ein Rohrunterbrecher bekannt, bei dem durch die Freigabe des Durchflusses des Mediums durch den Rohrtrenner die Membran von ihrer Anlage am Zuflußstutzen abgehoben wird, wobei erst durch diese Abhebebewegung die Membran in Richtung der Lufteintrittsöffnungen bewegt wird, um diese zu verschließen. Hier wird also zuerst der Durchfluß freigegeben, bevor die Lufteintrittsöffnungen verschlossen werden, so daß Wasser austreten kann.

Auf dem Markt ist ein ähnlicher Rohrunterbrecher bekannt geworden, bei dem im Bereich radialer Zuflußöffnungen eine schlauchförmige Membran eng am Zuflußstutzen anliegt, ohne jedoch abzudichten, während diese am abflußseitigen Ende den Zuflußstutzen mit Spiel umgibt. Bei Auftreten eines Vakuums auf der Zuflußseite des Rohrunterbrechers wird die Membran gegen den Zuflußstutzen gesaugt. Es hat sich aber gezeigt, daß bei plötzlicher Freigabe des Durchflusses durch den Rohrunterbrecher der abflußseitig von der Membran auftretende Druckanstieg dazu führen kann, daß Wasser seitlich aus den Lufteintrittsöffnungen des Gehäuses austritt. Derselbe Effekt tritt auch bei geringer Durchflußfreigabe auf, wen auf andere Weise, z.B. durch mehrmalige Umlenkungen des Mediums, abflußseitig vom Rohrunterbrecher ein Druckstau auftritt. Ein solches Austreten von Wasser durch die Lufteintrittsöffnungen ist aber unerwünscht, da ein solcher Rohrunterbrecher insbesondere im Zusammenhang mit Badewannen Anwendung findet und es beim Herablaufen des Wassers mit der Zeit an den Fugen zwischen den Fliesen zu einer Verfärbung kommt.

Aufgabe der Erfindung ist es deshalb, einen sicher arbeitenden, gattungsgemäßen Rohrunterbrecher so auszubilden, daß sichergestellt ist, daß eine Freigabe des Durchflusses erst erfolgt, wenn die Lufteintrittsöffnungen wirksam abgedichtet sind.

Diese Aufgabe wird erfindungsgemäß durch die kennzeichnenden Merkmale des Anspruchs 1 gelöst. Durch die unterschiedlichen Dehnungswiderstände der beiden Abschnitte der Membran wird sichergestellt, daß diese zunächst im Bereich ihres zuflußseitigen Abschnittes aufgeweitet wird und zur Anlage an die die Membran gegenüberliegenden Wand gebracht wird und damit die Lufteintrittsöffnungen abdeckt, bevor der abflußseitige Abschnitt der Membran den Durchfluß freigibt. Auf diese Weise ist stets die Verbindung zwischen den Lufteintrittsöffnungen und der Abflußseite des Rohrunterbrechers abgesperrt, wenn das Medium den Rohrunterbrecher durchfließt, so daß hier auch kein, z.B., Spritzwasser austreten kann. Andererseits wird der Durchfluß durch den Rohrunterbrecher sofort verschlossen, wenn zuflußseitig vom Rohrunterbrecher ein Absperrorgan die Mediumzufuhr zum Rohrunterbrecher unterbricht. Die Membran gibt somit auch hier die Lufteintrittsöffnungen erst frei, nachdem der Durchfluß durch den Rohrunterbrecher unterbrochen ist. Somit ist auch in diesem Fall der Durchfluß durch den Rohrunterbrecher unterbunden.

Der unterschiedliche Dehnungswiderstand der beiden Abschnitte der Membran kann auf verschiedene Weise erreicht werden. Vorteilhaft geschieht dies, wenn sich die Membran in ihrer Ausdehnung quer zur Durchflußrichtung verringert und dies gleichmäßig geschieht. Aufgrund der größeren Fläche, auf die der eingangsseitige Mediumsdruck wirkt, ist der Dehnungswiderstand, den die Membran ihre Verformung durch den Druck entgegensetzt im zuflußseitigen Abschnitt der Membran kleiner als im abflußseitigen.

Die unterschiedlichen Dehnungseigenschaften im zuflußseitigen und im abflußseitigen Abschnitt der Membran können auch dadurch erreicht werden, daß die Membran in ihrem abflußseitigen Abschnitt eine größere Wandstärke aufweist als in ihrem zuflußseitigen Abschnitt. Die Zunahme der Wandstärke in Abflußrichtung kann allmählich erfolgen; vorteilhafterweise ist jedoch vorgesehen, daß der abflußseitige Abschnitt eine Wulst trägt.

Durch die Festlegung einer Druckdifferenz zwischen Zuflußleitung und Abflußleitung über die Membran und deren Aufrechterhalten nach dem Absperren der Abflußleitung erreicht der Rohrtrenner zusätzlich wesentliche Eigenschaften eines Rohrtrenners bei viel kleineren technischen Aufwand.

Für eine einwandfreie Funktion des Rohrunterbrechers ist nicht nur eine zeitliche Steuerung des Durchflusses durch den Rohrunterbrecher erforderlich, sondern es kommt auch auf eine gute Abdichtung gegenüber den Lufteintrittsöffnungen an. Es hat sich als vorteilhaft erwiesen, wenn die die Membran umgebende Wand zwischen den Lufteintrittsöffnungen und dem abflußseitigen Abschnitt der Membran in Abflußrichtung eine Verringerung des Abstandes zur Membran erfährt.

Prinzipiell kann dies in beliebiger Weise, z.B. als eine konische Verjüngung, ausgebildet sein. Es hat sich jedoch als besonders vorteilhaft erwiesen, wenn die Verringerung des Abstandes sprunghaft erfolgt und sich im Abstand vom abflußseitigen Abschnitt der Membran befindet. Hierdurch wird eine besonders feste Anpressung der Membran im Bereich der Verringerung des Abstandes gegen die die Membran umgebende Wand erreicht.

Die Verringerung des Abstandes ist in bevorzugter Ausgestaltung des erfindungsgemäßen Rohrunterbrechers dergestalt ausgebildet, daß in Durchflußstellung die Membran durch den Druck des zufließenden Mediums mit einer bestimmten Kraft gegen die Kante in Richtung der Wand der sprungartigen Durchmesserreduzierung gedrückt wird. Diese Kraft ist größer als die, die von einem Medium ausgeübt wird, das in den Bereich zwischen Wand und Membran eingedrungen ist.

Die Lufteintrittsöffnungen werden vorteilhaft durch Schlitze gebildet, die zwischen Stegen liegen, aus denen die die Membran abstützende Wand gebildet ist.

In vorteilhafter Ausgestaltung der Erfindung wird die Membran als schlauchförmige Membran ausgebildet. Dies ist für deren Funktionstüchtigkeit besonders günstig, da die Membran nur in Durchflußrichtung fixiert zu werden braucht und sich durch die radiale Aufweitung gleichmäßig dichtend an die Wand anlegen kann.

Aus Gründen der Wartung ist es von besonderem Vorteil, wenn der Zuflußstutzen, die Membran sowie die den Zuflußstutzen konzentrisch umgebende Wand zusammen einen austauschbaren Einsatz bilden. Da die Membran, die sich für die Durchflußfreigabe dehnen und für die Freigabe der Belüftung wieder zusammenziehen muß, einer hohen Beanspruchung unterworfen ist, wird es von Zeit zu Zeit erforderlich, diese Membran auszutauschen. Dies läßt sich besonders gut erreichen, wenn die Funktionselemente des Rohrunterbrechers als austauschbarer Einsatz ausgebildet sind und somit als Ganzes aus dem Rohrunterbrecher herausgenommen werden können. Eine regelmäßige Überprüfung und ein rechtzeitiger Austausch der Membran sind für eine einwandfreie Dichtfunktion des Rohrunterbrechers von großer Bedeutung.

Es ist vorteilhaft, wenn der Einsatz und das Gehäuse zusammenarbeitende Anschläge als Drehsicherung aufweisen, da hierdurch eine einwandfreie Positionierung des Einsatzes im Gehäuse gewährleistet ist. Auch hierdurch wird sichergestellt, daß die Dichtfunktion des Rohrunterbrechers stets gewährleistet ist.

Aus Fertigungsgründen besteht zweckmäßigerweise der Einsatz aus Kunststoff.

Vorzugsweise werden die Lufteintrittsöffnungen als durch Stege voneinander getrennte Schlitze eines die schlauchförmige Membran umgebenden Schlitzkäfigs gebildet. Um einerseits bei der Fertigung des Schlitzkäfiges ein ungleichmäßiges Schrumpfen des Schlitzkäfigs zu vermeiden, weist dieser zweckmäßigerweise in seinem die Stege aufweisenden Bereich einen geringeren Außenumfang als im Bereich seiner beiden Enden auf. Dieser geringere Außendurchmesser erstreckt sich dabei jeweils so weit wie möglich in die Endbereiche des Einsatzes, um diese Wirkung noch zu unterstützen. Als funktioneller wesentlicher Vorteil wird auf diese Weise im Bereich der Schlitze des Schlitzkäfigs eine Ringkammer erzeugt, die eine gute Luftverteilung und damit auch einen guten Luftzutritt in das Innere des Einsatzes gewährleistet.

Um die schlauchförmige Membran sicher und dicht am Einsatz zu befestigen, trägt gemäß einer bevorzugten Ausbildung des Erfindungsgegenstandes der Zuflußstutzen zuflußseitig eine flanschartige Erweiterung, auf welche der Schlitzkäfig aufschiebbar ist, wobei die Membran mit einem flanschartigen Einspannende zwischen der flanschartigen Erweiterung des Zuflußstutzens und einer Radialwand des Schlitzkäfigs einklemmbar ist.

Für eine besonders sichere Abdichtung wird das flanschartige Einspannende 360 der schlauchförmigen Membran als Lippendichtung ausgebildet.

Im Hinblick auf eine günstige Fertigung ist vorzugsweise der Schlitzkäfig unterteilt in einen Steghalter und einen Klemmring für die Membran. Um die Stege des Schlitzkäfigs in radialer Richtung zu sichern, besitzt zweckmäßigerweise der Klemmring auf seiner dem Steghalter zugewandten Seite eine Ringnut zur Aufnahme der die Lufteintrittsöffnungen voneinander trennenden Stege.

Aufgrund von Toleranzen kann es vorkommen, daß die schlauchförmige Membran auf ihrem Umfang nicht überall die gleiche Wandstärke aufweist. Als Folge kann es bei übermäßig hohen zuflußseitigen Drücken vorkommen, daß die Membran einseitig nach außen gedrückt wird und dabei auf die Stege verschieden stark einwirkt. Um hierbei ein Nachgeben der Stege nicht nur in Umfangsrichtung, sondern darüber hinaus auch in radialer Richtung mit Sicherheit auszuschließen, sind zweckmäßigerweise zur Abstützung der Stege in Umfangsrichtung in der Ringnut gleichmäßig verteilte zahnartige Vorsprünge vorgesehen.

Eine günstige Luftströmung und dadurch auch eine einwandfreie Belüftung des Rohrunterbrechers wird in weiterer Ausgestaltung der Erfindung dadurch erreicht, daß sich die Stege in radialer Richtung von außen nach innen verjüngen. Darüber hinaus ist es vorteilhaft, wenn die Stege auf ihrer radial außen liegenden Seite ein abgerundetes Profil aufweisen.

Bei einer weiteren vorteilhaften Ausgestaltung des Rohrtrenners ist dessen Schaltstellung von außen erkennbar. Dies wird dadurch erreicht, daß das Anliegen der Membran an der Wand sichtbar gemacht ist. Dies wird durch eine Sichtöffnung in der Wand ermöglicht. Bei einer anderen Ausgestaltung verbindet ein Stellungsanzeiger die Membran mit dem einsehbaren Bereich des Rohrtrenners. Um auch bei einem eingebauten Rohrunterbrecher zu erkennen, in welcher Schaltstellung er sich befindet, sind Mittel vorgesehen, beispielsweise ein Gestänge oder ein elektrischer Wegaufnehmer, mit deren Hilfe die Schaltstellung des Rohrunterbrechers an eine einsehbare Stelle oder in ein Steuer- und Überwachungszentrum übertragen werden kann.

Da das Haupteinsatzgebiet derartiger Rohrunterbrecher im Zusammenhang mit Badeanlagen mit Zuflußöffnungen in der Wannen-Seitenwand zu sehen ist, wird im Rahmen der vorliegenden Erfindung meist von Wasser gesprochen. Es versteht sich, daß bei analogem Einsatz in individuellen Anlagen statt Wasser auch ein anderes Medium den Rohrunterbrecher durchfließen kann.

Gemäß einer weiteren Ausführung wird zweckmäßigerweise vorgesehen, daß die Öffnung im Gehäuse zugleich die Belüftungsöffnung bildet. Hierdurch wird eine bessere Zugänglichkeit des Einsatzes erreicht.

Bei der Installation eines Leitungsstranges liegt dieser nicht stets im exakt gleichen Abstand von der Oberfläche der Wand entfernt. Es ist deshalb erforderlich, diesen Abstand zu überbrücken. Zu diesem Zweck ist in weiterer Ausgestaltung des erfindungsgemäßen Rohrunterbrechers vorgesehen, daß das Gehäuse einen die Belüftungsöffnung aufnehmenden Rohrstutzen trägt, an welchem wahlweise eine Verlängerungshülse oder eine Abdeckkappe anschließbar ist. Eine solche Ausbildung des Erfindungsgegenstandes ist inbesondere dann von Vorteil, wenn die Öffnung so groß ist, daß durch diese hindurch der Einsatz ausgewechselt werden kann. Aber auch dann, wenn die Öffnung kleiner als die Öffnung ist, durch welche hindurch der Einsatz auswechselbar ist, läßt sich ein notwendig werdender Austausch des Einsatzes durchführen, indem der Rohransatz vom Gehäuse abgenommen wird, beispielsweise durch Lösen von Schrauben.

Gemäß einer bevorzugten Ausbildung des erfindungsgemäßen Rohrunterbrechers weisen sowohl der Innenraum des Gehäuses als auch die Öffnung im Rohrstutzen Zylinderform auf und sind zueinander koaxial angeordnet, wobei der Innendurchmesser der Öffnung mindestens ebenso groß ist wie der Innendurchmesser des Gehäuseraums und wobei sich der Einsatz im wesentlichen quer zur Achse des Innenraumes des Gehäuses erstreckt. Durch eine solche Ausbildung des Rohrunterbrechers läßt sich der Einsatz nicht nur durch die Öffnung im Rohransatz hindurch ein- und ausbauen, sondern es entsteht seitlich neben dem Einsatz noch ein Raum, in welchen Greifwerkzeuge zum Erfassen des Einsatzes eingebracht werden können. Dies ist insbesondere dann zweckmäßig, wenn der Rohrunterbrecher sehr tief in der Wand angeordnet ist.

Damit der Rohrstutzen keinen größeren Durchmesser benötigt als der Innenraum des Gehäuses und dennoch keine Abdeckung vom Gehäuse abgenommen werden muß, um den Einsatz austauschen zu können, weist dieser vorteilhafterweise an seinen beiden Enden eine der Zylinderform des Innenraumes des Gehäuses angepaßte Kontur auf und trägt zur Abdichtung gegenüber dem Gehäuse an diesen beiden Enden jeweils eine Ringdichtung. Hierdurch wird erreicht, daß der Einsatz dichtend an der Umfangswand des Innenraumes des Gehäuses anliegt und trotzdem in radialer Richtung nirgends die runde Umfangswand dieses Innenraumes überragt.

Um zur Gewährleistung einer sicheren Abdichtfunktion des Rohrunterbrechers dessen Relativstellung gegenüber dem Gehäuse zu sichern, weist vorteilhafterweise das Gehäuse auf seiner der Öffnung abgewandten Seite eine mit dem Einsatz zusammenarbeitende Ausnehmung auf, die als Drehsicherung für den Einsatz dient.

Die Wandstärke kann zwischen Leitungsstrang und damit Rohrunterbrecher und Wandaußenseite variieren. Ein Ausgleich ist durch unterschiedliche Längen der Verlängerungshülse möglich. Um bei der Installation nicht übermäßig große Längenabschnitte an der Verlängerungshülse abschneiden zu müssen oder um nicht über unterschiedlich lange Verlängerungshülsen verfügen zu müssen, kann in weiterer Ausgestaltung der erfindungsgemäßen Vorrichtung vorgesehen werden, daß die Verlängerungshülse auf ihrem Außenumfang mehrere Ringnuten aufweist, in welche auf dem Innenumfang einer weiteren Verlängerungshülse vorgesehene Ringstege in Eingriff bringbar sind. Auf diese Weise können bei Bedarf zur Überbrückung des Abstandes zwischen Wandaußenfläche und Rohrtrenner auch mehrere Verlängerungshülsen hintereinander angeordnet werden, wobei die Mehrzahl von Ringnuten auf dem Außenumfang der Verlängerungshülse eine fein abgestufte Anpassung an unterschiedliche Wandstärken ermöglicht. Die Zugänglichkeit zum Innenraum des Gehäuses und damit zum Einsatz leidet hierunter nicht.

Auch nach einem Austausch eines Einsatzes muß sichergestellt sein, daß genügend Luft in das Innere des Gehäuses eindringen kann. In einer einfachen Ausgestaltung der Erfindung wird eine ausreichende Luftzufuhr dadurch sichergestellt, daß die Abdeckkappe eine Verbindungshülse aufweist, die mit einem ersten Längenabschnitt in den Rohrstutzen des Gehäuses oder in eine Verlängerungshülse einschiebbar ist und in einem zweiten Längenabschnitt mit vergrößertem Außendurchmesser ringförmig verteilte Belüftungsöffnungen aufweist, die das Innere des Rohransatzes mit der Atmosphäre verbinden, wobei der Durchmesserübergang zwischen erstem und zweitem Längenabschnitt durch eine Anschlagschulter gebildet wird, die zur Anlage an das einen Gegenanschlag bildende freie Stirnende des Rohransatzes oder der Verlängerungshülse bringbar ist. Durch die beschriebene Ausbildung des Erfindungsgegenstandes ist auch bei Austausch des Einsatzes durch Laien, wie dies insbesondere häufig bei Wasserinstallationsanlagen üblich ist, eine sichere Funktion auch nach dem erneuten Zusammenbau gewährleistet, da die Belüftungskappe nicht zu tief in den Rohransatz bzw. in die Verlängerungshülse eingeschoben werden kann. Die Belüftungsöffnungen in der Belüftungskappe werden somit auf jeden Fall immer frei gehalten.

Der zuvor im Aufbau beschriebene Rohrunterbrecher erfüllt einerseits die in der DIN 3266, Teil 1, vom Juli 1986 aufgestellten Forderungen, daß die Lufteintrittsöffnungen bei Nulldurchfluß offen sind, wodurch im Rohrinneren der atmosphärische Druck herrscht. Darüber hinaus wird durch den erfindungsgemäßen Rohrunterbrecher erreicht, daß auch bei Freigabe des Durchflusses durch den Rohrunterbrecher ein Austreten von Spritzwasser mit Sicherheit ausgeschlossen wird. Dies ist von besonderer Wichtigkeit, da derartige Rohrunterbrecher in der Regel im Zusammenhang mit sanitären Installationen in einem adezimmer vorgesehen sind. Austretendes Wasser würde zu einer Verfärbung der Fugen zwischen den Fliesen führen, was insbesondere in Badezimmern zu vermeiden ist. Da ein solches Austreten von Wasser mit Sicherheit mit Hilfe des erfindungsgemäßen Rohrunterbrechers vermieden wird, ist dieser Rohrunterbrecher nicht nur für eine Anordnung über Putz, sondern genauso gut auch für eine Anordnung unter Putz geeignet.

Der erfindungsgemäße Rohrunterbrecher ist auf sehr einfache Weise zu installieren und zu warten und ermöglicht in sehr einfacher Weise auch nach seinem Einbau unter Putz den Austausch des Einsatzes, so daß dieser Austausch auch von Laien durchgeführt werden kann. Durch diese Eigenschaft wird erreicht, daß der Rohrunterbrecher auch über lange Zeit sicher arbeiten kann.

Mehrere Ausführungsbeispiele werden nachstehend anhand von Zeichnungen näher erläutert. Es zeigen:

Fig. 1 im Querschnitt eine erste erfindungsgemäß vorteilhafte Ausführungsform eines Rohrunterbrechers mit einer schlauchförmigen Membran,

Fig. 2 den in Fig. 1 gezeigten Rohrunterbrecher im Längsschnitt;

Fig. 3 im Querschnitt weitere Ausbildungen des Erfindungsgegenstandes, wobei in der linken Hälfte der Figur eine Membran mit kontinuierlich zunehmender Schlauchstärke und rechts eine Membran mit einer Wulst am abflußseitigen Längenabschnitt der schlauchförmigen Membran gezeigt wird;

Fig. 4 eine Vorderansicht eines Details des in den Fig. 1 bis 3 gezeigten Rohrunterbrechers,

Fig. 5 im Querschnitt die Ausbildung der Stege eines die schlauchförmige Membran umgebenden Schlitzkäfigs,

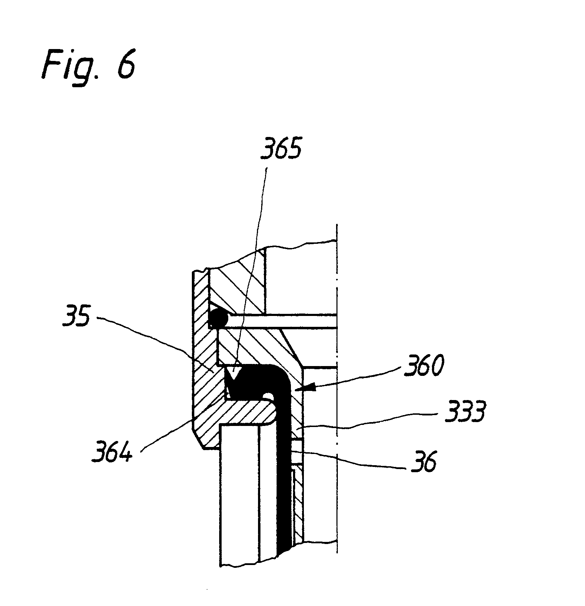

Fig. 6 eine Teilansicht des Rohrunterbrechers mit dem zu einer Lippendichtung ausgebildeten Einspannende der schlauchförmigen Membran;

Fig. 7 einen Schlitzkäfig mit einer Sichtöffnung;

Fig. 8 einen Schnitt durch einen Steg und die Sichtöffnung des Schlitzkäfigs;

Fig. 9 einen Schnitt durch einen Rohrunterbrecher mit einem Stellungsanzeiger;

Fig. 10 einen Rohrunterbrecher mit einer flächigen Membran; und

Fig. 11 eine Membran in flächiger Ausbildung.

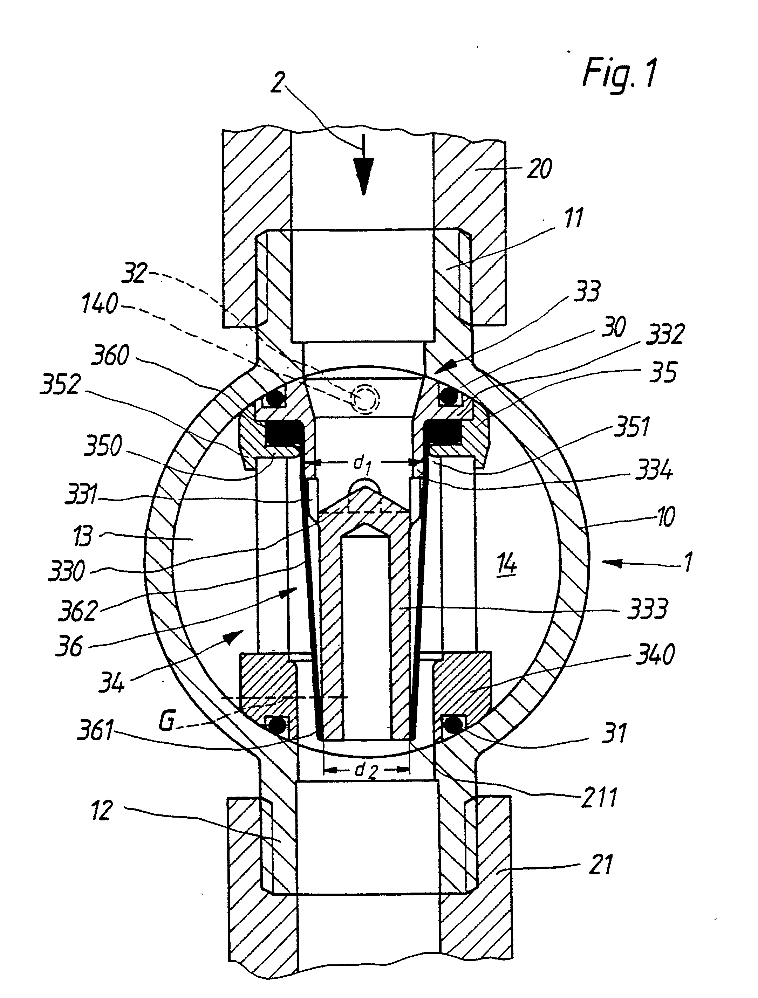

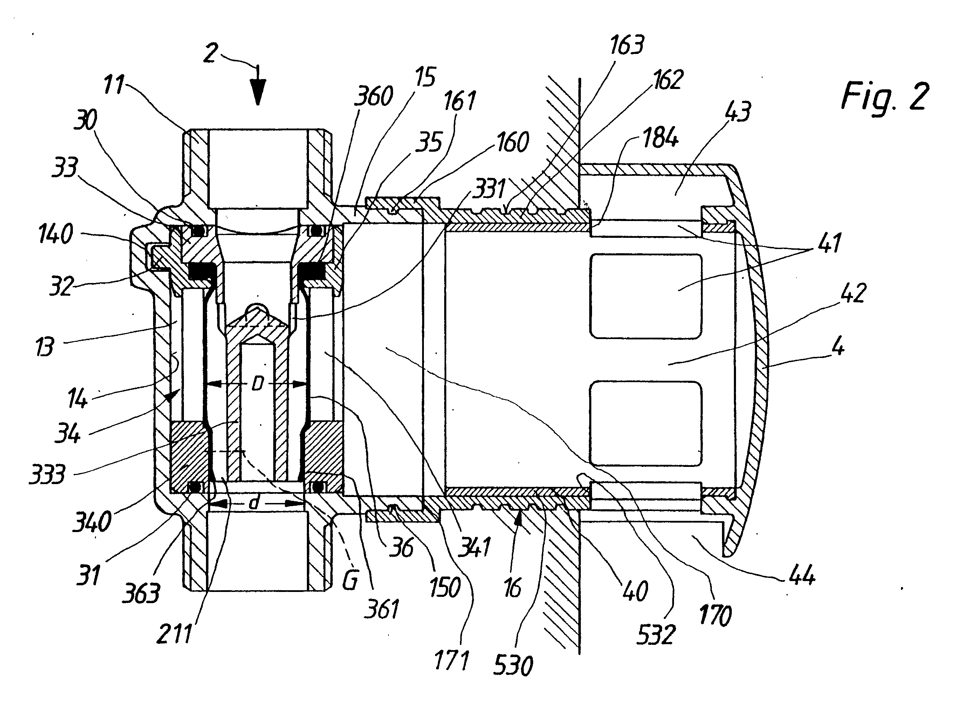

Der Rohrunterbrecher 1 wird zunächst anhand der Fig. 1 und 2 erläutert. Er besitzt ein Gehäuse 10, das über einen Zulaufstutzen 11 mit einer Zuflußleitung 20 und über einen Ablaufstutzen 12 mit einer Abflußleitung 21 in Verbindung steht.

Die Durchflußrichtung durch den Rohrunterbrecher 1 ist durch einen Pfeil 2 gekennzeichnet. Das Gehäuse 10 besitzt einen zylinderförmigen Innenraum 13, in welchem ein austauschbarer Einsatz 3 gelagert ist. Die beiden Enden des Einsatzes 3 sind an die Zylinderform des Innenraums 13 des Gehäuses 10 angepaßt und tragen zur Abdichtung eine Ringdichtung 30 bzw. 31.

Der Einsatz 3 ist mit Hilfe eines Ansatzes 32, der in eine entsprechende Ausnehmung 140 im ßoden 14 des Gehäuses 10 eingreift, gegen Drehung gesichert.

Der Einsatz 3 besitzt in axialer Verlängerung des Zulaufstutzens 11 einen Zuflußstutzen 33, dessen Innenraum mit dem Zulaufstutzen 11 in steter Verbindung steht und abflußseitig durch eine Radialwand 330 verschlossen ist. Der Zuflußstutzen 33 besitzt zwischen dem Zulaufstutzen 11 des Gehäuses 10 und der erwähnten Radialwand 330 in seiner Umfangswand radiale Zuflußöffnungen 331, deren Zweck später noch näher beschrieben wird. Der Zuflußstutzen 33 besitzt zuflußseitig eine flanschartige Erweiterung 332, in welcher die erwähnte Ringdichtung 30 gelagert ist.

Durch einen Schlitzkäfig 34, der zuflußseitig einen Klemmring 35 mit einer radialen Ringwand 350 aufweist, wird eine schlauchförmige Membran 36 mit ihrem zuflußseitigen Einspannende 360 zwischen der Ringwand 350 des Klemmringes 35 und der flanschartigen Erweiterung 332 des Zuflußstutzens 33 eingespannt.

Abflußseitig schließt sich an die Radialwand 330 des Zuflußstutzens 33 eine Stützhülse 333 an, deren Außendurchmesser (siehe Durchmesser $d_2$) kleiner ist als der Außendurchmesser (siehe Durchmesser $d_1$) des Zuflußstutzens 33 in seinem die Zuflußöffnungen 331 aufnehmenden Längenbereich 334. Die schlauchförmige Membran 36 verjüngt sich von ihrem Einspannende 360 bis zu ihrem abflußseitigen Ende (Abschnitt 361), so daß die Membran 36 mit ihrem abflußseitigen Ende (361) am Außenumfang der Stützhülse 333 anliegt.

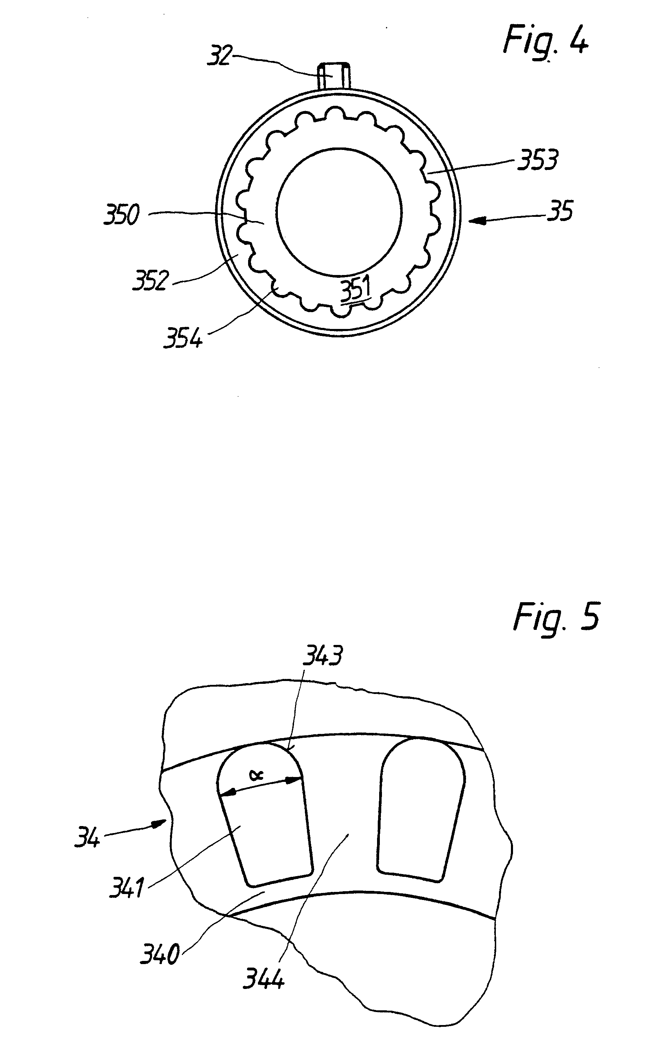

Der Schlitzkäfig 34 besitzt zwischen seinem zuflußseitigen Klemmring 35 und einem abflußseitigen ringförmigen Steghalter 340 ringförmig verteilte Stege 341, zwischen denen nicht gezeigte Schlitze ausgebildet sind. Diese Schlitze bilden Lufteintrittsöffnungen 344 zur Belüftung der Abflußleitung 21 (siehe Fig. 5). Der Steghalter 340 nimmt außerdem die erwähnte Ringdichtung 31 auf.

Die in den Fig. 1 und 2 gezeigte schlauchförmige Membran 36 besitzt zwei Abschnitte 362 und 361 mit unterschiedlichem Dehnungswiderstand. Unter dem Dehnungswiderstand ist dabei der Widerstand der Membran gegen eine Aufweitung bzw. Dehnung zu verstehen. Der Dehnungswiderstand der Membran 36 kann durch verschiedene Faktoren festgelegt werden. Diese sind z.B. die Vorspannung der Membran, die Wandstärke, die Materialeigenschaft, zusätzliche Kräfte ausübende Mittel und die Ausgestaltung der geometrischen Form der Membran. Eine ungünstige geometrische Form, beispielsweise ein steigender Durchmesser einer schlauchförmigen Membran 5 muß durch beispielsweise eine größere Wandstärke der Membran 5 kompensiert werden.

Der Abschnitt 362 der schlauchförmigen Membran 36 erstreckt sich vom Einspannende 360 bis in den Bereich des Steghalters 340, d.h. in Durchflußrichtung (Pfeil 2) bis über die zwischen den Stegen 341 ausgebildeten Lufteintrittsöffnungen 344 hinaus. Der sich hieran anschließende Abschnitt 361 ist gegenüber dem Abschnitt 362 im Durchmesser so stark reduziert, so daß er im wesentlichen dichtend, d.h. mit einer gewissen Vorspannung, an der Stützhülse 333 anliegt.

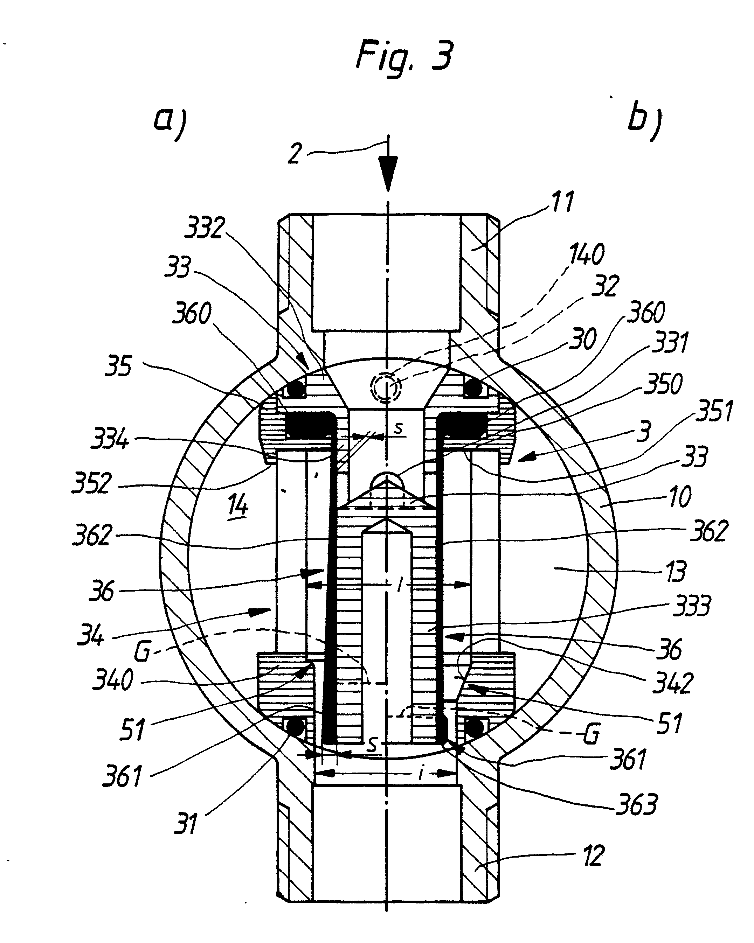

Bei dem in den Fig. 1 und 2 gezeigten Ausführungsbeispiel gehen die Abschnitte 362 und 361 ineinander über, während die Übergangsstelle (Linie G) bei anderen Ausführungsbeispielen (siehe Fig. 3b) klar zu erkennen ist. Wesentlich ist, daß sich diese Linie G im Bereich der Innenumfangswand des Steghalters 340 befindet und die Membran 36 abflußseitig von dieser Linie G - also im abflußseitigen Abschnitt 361 - einen größeren Dehnungswiderstand aufweist als zuflußseitig von dieser Linie G - also im zuflußseitigen Abschnitt. Die sich hieraus ergebende Wirkung wird nachstehend beschrieben.

Fig. 1 zeigt den Rohrunterbrecher 1 in der Belüftungsstellung, in welcher ein Zufluß des Mediums zum Rohrunterbrecher 1 durch ein nicht gezeigtes, in der Zuflußleitung 20 angeordnetes Absperrorgan freigegeben ist. In dieser Stellung wird die Verbindung zwischen der Zuflußleitung 20 und der Abflußleitung 21 durch die Membran 36, insbesondere ihren abflußseitigen Abschnitt 361, unterbunden.

Wird nun das in der Zuflußleitung 20 befindliche Absperrorgan geöffnet, so übt das Medium, das den Zuflußstutzen 33 durch die Zuflußöffnungen 331 verläßt, auf die Membran 36 einen radialen Druck aus. Da die Membran 36, die über ihre Länge einen konstanten Wandquerschnitt aufweist, im Bereich der Zuflußöffnungen 331 einen größeren Innendurchmesser (siehe Durchmesser $d_1$) aufweist, bildet diese Innenwand auch eine größere Angriffsfläche für das zuströmende Medium im Vergleich zu der Innenumfangswand der Membran 36 weiter abflußseitig. Aus diesem Grunde wird die Membran 36 zunächst im bereich der Zuflußöffnungen 331 gedehnt, bis sie sich an der Innenseite der Stege 341 des Schlitzkäfigs 34 anlegt (siehe Fig. 2). Von der Zuflußseite ausgehend in Richtung Abflußseite weitet sich die Membran 36 immer weiter aus, wobei ihr in Abflußrichtung ein zunehmend größerer Dehnungswiderstand entgegengesetzt wird. Zwischen dem abflußseitigen Abschnitt 361, der noch immer dichtend an der Stützhülse 333 anliegt, gelangt nunmehr die Membran 36 zur Anlage an den Steghalter 340 des Schlitzkäfigs 34 und dichtet hier die Passage zwischen Ablaufstutzen 12 und Innenraum 13 des Gehäuses 10 ab. Erst anschließend ist der Mediumdruck im Inneren der Membran 36 auch im Bereich des abflußseitigen Abschnittes 361 der Membran 36 so weit angestiegen, daß auch dieser Abschnitt 361 von der Stützhülse 333 abgehoben und gegen die Innenwand des Steghalters 340 gepreßt wird. Der Durchfluß durch den Rohrunterbrecher 1 ist nunmehr freigegeben. An der Austrittsöffnung 211 verläßt das Wasser den Bereich der Membran 36 und fließt in den Ablaufstutzen 12. Ein Austreten von Spritzwasser durch die Lufteintrittsöffnungen 344 (Fig. 5) zwischen den Stegen 341 ist ausgeschlossen, da der Durchfluß durch den Rohrunterbrecher 1 erst freigegeben wird, nachdem die Verbindung zwischen dem Ablaufstutzen 12 und dem Innenraum 13 verschlossen worden ist.

Wird nun in der Zuflußleitung 20 das nicht gezeigte Absperrorgan abgesperrt, so verringert sich der Mediumdruck im Inneren der Membran 36. Der abflußseitige Längenabschnitt 361 legt sich aufgrund seiner Vorspannung zunächst dichtend an die Stützhülse 333 an. Sodann löst sich vom Abflußende aus fortschreitend in Richtung zum Zuflußende die Membran 36 vom Steghalter 340 bzw. von der Innenseite der Stege 341, bis die Membran 36 schließlich wieder ihre in Fig. 1 gezeigte Stellung einnimmt.

Da auch bei Unterbrechen des Durchflusses durch den Rohrunterbrecher 1 zunächst ein dichtender Abschluß zwischen Membran 36 (abflußseitiger Abschnitt 361) und Stützhülse 333 gebildet wird, bevor die Verbindung zwischen dem Innenraum 13 des Gehäuses 10 und dem Ablaufstutzen 12 freigegeben wird, wird auch beim Unterbinden des Durchflusses durch den Rohrunterbrecher 1 ein Austreten von Spritzwasser durch die zwischen den Stegen 341 befindlichen Lufteintrittsöffnungen 344 wirksam vermieden.

Aufgrund dieser sicheren Abdichtung sowohl bei Freigabe des Durchflusses als auch bei Beendigung des Durchflusses ist der beschriebene Rohrunterbrecher 1 prädestiniert für eine Montage unter Putz, obwohl er natürlich auch, falls gewünscht, für eine Über-Putz-Montage vorgesehen werden kann.

Bei dem in den Fig. 1 und 2 gezeigten Ausführungsbeispiel besitzt der abflußseitige Abschnitt 361 der schlauchförmigen Membran 36 eine im Vergleich zu dem zuflußseitigen Abschnitt 362 veränderte geometrische Form, einen reduzierten Durchmesser. Dieser ergibt sich bei dem in diesen Figuren gezeigten Ausführungsbeispiel dadurch, daß die Membran 36 auf ihrer gesamten Länge einen in Durchflußrichtung (Pfeil 2) kontinuierlich abnehmenden Durchmesser aufweist.

Diese kontinuierliche Durchmesserabnahme ist jedoch nicht Voraussetzung für den vorliegenden Rohrunterbrecher 1. Es ist durchaus auch möglich, daß der Abschnitt 362, welcher vom Einspannende 360 der Membran 36 bis in den Bereich des Steghalters 340 des Schlitzkäfigs 34 reicht, einen konstanten Querschnitt aufweist, der dann in Form einer Durchmesserreduzierung in den eng an der Stützhülse 333 anliegenden abflußseitigen Abschnitt 361 der schlauchförmigen Membran 36 übergeht. Auch hier ist die oben geschilderte Funktion sichergestellt.

Es ist nicht erforderlich, aber durch entsprechende Vorspannung der Membran 36 durchaus möglich und auch vorteilhaft, daß sich der erste Abschnitt 362 der Membran 36 bei fehlendem Mediumzufluß zum Rohrunterbrecher 1 dichtend an den Zuflußstutzen 33 im Bereich von dessen Zuflußöffnungen 331 anlegt.

Der anhand einer ersten Ausführungsform beschriebene Rohrunterbrecher 1 kann in vielfältiger Weise abgeändert werden, ohne den Rahmen der vorliegenden Erfindung zu verlassen, insbesondere durch Ersatz von Merkmalen durch Äquivalente oder durch andere Kombinationen. So ist es beispielsweise nicht erforderlich, daß die unterschiedlichen Dehnungswiderstände der beiden Abschnitte 361 und 362 der Membran 36 durch unterschiedliche Durchmesser der Membran 36 erreicht werden.

Weitere Ausführungsbeispiele werden anhand der Fig. 3 erläutert, wobei in der linken Hälfte der Fig. 3 eine erste Abwandlung (Fig. 3a) und in der rechten Hälfte eine weitere Abwandlung (Fig. 3b) gezeigt wird.

Sowohl bei dem Ausführungsbeispiel nach Fig. 3a als auch bei dem Ausführungsbeispiel nach Fig. 3b weist der Zuflußstutzen 33 einen konstanten Außendurchmesser auf, an welchem die schlauchförmige Membran 36 mit Vorspannung anliegt. Die Membran 36 weist eine Wandstärke auf, die von der Zuflußseite in Richtung zur Abflußseite des Rohrunterbrechers 1 kontinuierlich zunimmt. Auf diese Weise ist die Vorspannung der schlauchförmigen Membran 36 abflußseitig größer als zuflußseitig. Auch hier kann der Abschnitt der Membran 36 vom Einspannende 360 bis in den Bereich des Steghalters 340 des Schlitzkäfigs 34 als ein erster Abschnitt 362 betrachtet werden, der zunächst zur Anlage an die Stege 341 bzw. an die Innenumfangswand des Steghalters 340 gebracht werden muß, bevor der abflußseitige Abschnitt 361 der Membran 36 von der Stützhülse 333 des Zuflußstutzens 33 abgehoben wird. Die Funktion entspricht somit derjenigen, die zuvor anhand der Fig. 1 und 2 beschrieben wurde.

Bei der in Fig. 3b gezeigten Variante besitzt die Membran 36 im Bereich ihres zuflußseitigen Abschnittes 362, d.h. zwischen Einspannende 360 und abflußseitigen Abschnitt 361, eine konstante Wandstärke. Der abflußseitige Abschnitt 361 besitzt im Vergleich zum zuflußseitigen Abschnitt 362 eine wesentlich größere Wandstärke.

Auch bei einer solchen Ausführung, wie sie in Fig. 3b gezeigt ist, wird zunächst der zuflußseitige Abschnitt 362 vom Zuflußstutzen 33 abgehoben und zur Anlage an die Stege 341 und an die Innenwand des Steghalters 340 gebracht, bevor der Mediumdruck in der Lage ist, nunmehr auch abflußseitig den Abschnitt 361 der Membran 36 von der Stützhülse 333 abzuheben und zur Anlage an den Steghalter 340 des Schlitzkäfigs 34 zu bringen.

Die Fig. 2 zeigt, daß die Membran 36 in ihrem abflußseitigen Abschnitt 361 sowohl einen gegenüber dem zuflußseitigen Abschnitt 362 reduzierten Innendurchmesser aufweisen und zugleich im Bereich ihres abflußseitigen Abschnittes 361 eine größere Wandstärke besitzen kann als in ihrem zuflußseitigen Abschnitt 362. Diese größere Wandstärke im abflußseitigen Abschnitt 361 kann dabei durch eine allmähliche Wandstärkenänderung als auch durch eine sprunghafte Wandstärkenänderung in Form eines Wulstes 363 gebildet sein, wie die Fig. 2 und 3b deutlich zeigen.

Die Abdichtsicherheit ist in der beschriebenen Weise durch die unterschiedlichen Dehnungseigenschaften der beiden Abschnitte 362 und 361 der Membran 36 gewährleistet. Um im Bereich des abflußseitigen Abschnittes 361 im Vergleich zu dem zuflußseitigen Abschnitt 362 eine besonders gute Anlage der Membran 36 am Steghalter 340 zu erzielen, besitzt in den gezeigten Ausführungsbeispielen die die schlauchförmige Membran 36 umgebende Wand zwischen den Lufteintrittsöffnungen 344 (zwischen den Stegen 341) und dem abflußseitigen Abschnitt 361 der Membran 36 in Durchflußrichtung (Pfeil 2) eine Verringerung ihres Abstandes 5 zur Membran 36 die als Durchmesserreduzierung 51 ausgebildet ist. Gemäß Fig. 3b wird diese Durchmesserreduzierung 51 durch eine sich in Durchflußrichtung (Pfeil 2) verjüngende konische Wand 342 des Steghalters 340 gebildet. Gemäß Fig. 3a ist diese Durchmesserreduzierung 51 in Form eines Durchmessersprunges ausgebildet, so daß ein abrupter Übergang vom Innendurchmesser I im Bereich der Stege 341 zum Innendurchmesser i im Bereich des abflußseitigen Abschnittes 360 der Membran 36 entsteht. Diese Durchmesserreduzierung 51 ist dabei noch im Bereich des Abschnittes 362 der Membran 36, d.h. im axialen Abstand vom abflußseitigen Abschnitt 361 der Membran 36 angeordnet.

Bei einer abrupten Durchmesseränderung gemäß Fig. 3a wird auch dann noch eine einwandfreie Dichtfunktion erreicht, wenn der abflußseitige Abschnitt 361 der Membran 36 infolge Alterung die Dehnungsbewegungen nicht mehr vollständig ausführen kann, da aufgrund der plötzlichen Durchmesserreduzierung 51 eine besonders hohe Anpressung der Membran 36 an die Innenumfangswand des Steghalters 340 im Bereich dieser Durchmesserreduzierung 51 erzielt wird. Diese Wirkung kann noch dadurch erhöht werden, daß der Grad der Durchmesserreduzierung 51 und der Innendurchmesser der Membran 36 so aufeinander abgestimmt werden, daß dann, wenn der Abschnitt 362 sich an die Stege 341 und die Innenumfangswand des Steghalters 340 angelegt hat, der Innendurchmesser der Membran 36 im Bereich ihres Abschnittes 362 größer ist als der Außendurchmesser des abflußseitigen Abschnittes 361, wenn dieser an der Innenumfangswand des Steghalters 340 anliegt. Da der Innendurchmesser D im Bereich des Abschnittes 362 auf diese Weise bei freigegebenem Durchfluß größer ist als der Außendurchmesser d im Bereich des abflußseitigen Abschnittes 361, wirkt bei freigegebenem Durchfluß auf jeden Fall im Bereich des zuflußseitigen Abschnittes 362 von der Innenseite der Membran 36 ein größerer Druck, als dies im Bereich des abflußseitigen Abschnittes 361 möglich ist.

Über die von Rohrunterbrechern geforderten Eigenschaften hinaus besitzt der beschriebene Rohrunterbrecher 1 auch wesentliche Eigenschaften eines Rohrtrenners. Der Rohrunterbrecher 1 gibt den Durchfluß des Mediums erst frei, wenn ein durch die Eigenschaft der Membran 36 festgelegter Überdruck des Mediums gegenüber dem Umgebungsdruck erreicht wird. Ist dies nicht der Fall, so kann der Mediumdruck die Membran 36 nicht gegen den Druck der Umgebung (Luftdruck) anheben und die Lufteintrittsöffnung 344 (Fig. 5) verschließen. Sinkt während des Durchflusses der eingangsseitige Mediumdruck unter den geforderten Wert, so drückt der Umgebungsdruck die Membran 36 auf die Stützhülse 333 zurück.

Besonders sicher kann der Rohrunterbrecher 1 auch wie ein Rohrtrenner arbeiten, wenn er mit einer Wulst 363 am abflußseitigen Abschnitt 360 der Membran 36 und der oben beschriebenen Durchmesserreduzierung 51 ausgestattet ist. Damit kann der beim Durchfließen des Mediums durch die Membran 36 auftretende Druckverlust auf einen günstigen oder geforderten Wert sicher eingestellt werden. Ist der Durchfluß durch den Rohrtrenner 1 von Fig. 1 dadurch unterbrochen, daß die Abflußleitung 21 abgesperrt ist, so legt sich die Wulst 363 an die Stützhülse 333 an, während die übrige Membran 36 in ihrer Durchflußstellung verbleibt, d.h. mit ihrem Außendurchmesser anliegt, und die Zuluftöffnungen 344 (Fig. 5) abschließt. In Durchflußrichtung vor dem Wulst 363 herrscht ein höherer Druck im Medium als im Bereich dahinter. Dies wird durch die Druckminderungs-Eigenschaft der Membran 36 bzw. der des Wulstes 363 bewirkt.

Der Rohrunterbrecher 1 trennt dabei noch nicht. Erst bei einem Fallen des zuflußseitigen Drucks oder einem Ansteigen des abflußseitigen Druckes, wobei in beiden Fällen die Gefahr eines unerwünschten Zurückfließens des Mediums bestünde, geht der Rohrunterbrecher 1 sofort in Trennstellung. Die Druckverhältnisse sind in diesem Zustand des Rohrunterbrechers 1 derart, daß die Membran 36, die mit ihrem Wulst 363 bereits auf der Stützhülse 333 aufliegt, durch den abflußseitigen Mediumdruck auf die Stützhülse 333 gedrückt wird. Der in der abflußseitigen Leitung anstehende höhere Druck baut sich über die Lufteintrittsöffnungen 344 ab (Fig. 5).

Prinzipiell können die Funktionsteile des Rohrunterbrechers 1 in beliebiger Weise eingebaut sein. Da es für die Funktionssicherheit jedoch eine wesentliche Rolle spielt, daß bei Alterung und Abnützung die entsprechenden Funktionsteile rasch ausgewechselt werden können, ist gemäß den gezeigten vorteilhaften Ausbildungen vorgesehen, daß der Zuflußstutzen 33, die Membran 36 sowie die den Zuflußstutzen 33 konzentrisch umgebende Wand (Innenseite des Steghalters 34) zusammen einen austauschbaren Einsatz 3 bilden.

Wie durch die Schraffur in Fig. 3a und Fig. 3b angedeutet, bestehen die Einzelteile des Einsatzes 3 aus Kunststoff. Dies ermöglicht eine kostengünstige Fertigung.

Der Schlitzkäfig 34 kann einteilig ausgebildet werden. Für eine kostengünstige Fertigung ist es jedoch vorteilhaft, wenn der Klemmring 35 und der Steghalter 340 mit den Stegen 341 zwei getrennte Teile bilden. Dabei werden die Stege 341 im eingebauten Zustand in axialer Richtung durch den Klemmring 35 abgestützt. Damit bei großem zuflußseitigen Druck die Stege 341 durch die aufgeweitete Membran 36 nicht radial nach außen gebogen werden können, was über kurz oder lang zu einer bleibenden Deformierung des Schlitzkäfigs 34 und damit zu einer Beschädigung des Schlitzkäfigs 34 führen würde, besitzt in den gezeigten Ausführungen der Klemmring 35 auf seiner dem Schlitzkäfig 34 zugewandten Seite eine Ringnut 351 zur Aufnahme der die Lufteintrittsöffnungen 344 voneinander trennenden Stege 341. Wie die Fig. 1 bis 3 zeigen, brauchen die Stege 341 radial nach innen nicht abgestützt zu werden, sondern es genügt eine radiale Abstützung nach außen in Form eines Ringsteges 352, da auf die Stege 341 lediglich eine radial nach außen wirkende Kraft zur Einwirkung gelangt. Durch eine solche Ringnut 351 für die Stege 341 wird die Funktionssicherheit des Rohrunterbrechers ebenfalls auf Dauer gewährleistet.

Durch Fertigungstoleranzen kann der Fall eintreten, daß sich die Membran 36 über ihren Umfang unterschiedlich rasch ausdeht und somit auch die Stege 341 unterschiedlich stark belastet und damit nicht nur eine Kraft in radialer Richtung, sondern auch in Umfangsrichtung ausübt. Damit die Stege 341 dieser Kraft nicht folgen und seitlich ausweichen können, ist gemäß Fig. 4 vorgesehen, daß in der Ringnut 351 gleichmäßig verteilte zahnartige Vorsprünge 353 vorgesehen sind. Diese Vorsprünge 353 können vom Ringsteg 352 getrennt auf der Ringwand 350 angeordnet sein oder auch, wie dies in dem Ausführungsbeispiel gemäß Fig. 4 der Fall ist, eine Art Innenzahnkranz am Ringsteg 352 bilden. In die Ausnehmungen 354 zwischen den Vorsprüngen 353 greifen die Stege 341 ein und werden somit in Umfangsrichtung abgestützt und gesichert.

Für eine einwandfreie Belüftung ist es notwendig, daß die Luft rasch in das Innere des Rohrunterbrechers 1 gelangen kann. Aus diesem Grunde ist zur Erzielung einer vorteilhaften Luftströmung gemäß Fig. 5 vorgesehen, daß sich die Stege 341 in radialer Richtung von außen nach innen verjüngen (siehe Winkel α ). Darüber hinaus ist gemäß Fig. 5 zur Erzielung einer günstigen Luftströmung vorgesehen, daß die Stege 341 auf ihrer radial außen liegenden Seite ein abgerundetes Profil 343 aufweisen.

Wie die Fig. 1 bis 3 zeigen, ist vorgesehen, daß der Schlitzkäfig 34 in seinem die Stege 341 aufweisenden Längenbereich einen geringeren Außenumfang aufweist als im Bereich seiner Enden, d.h. des Klemmringes 35 und des Steghalters 340. Auf diese Weise entsteht im Umfangsbereich der Stege 341 ein Ringraum, der eine für die Belüftung der Abflußleitung 21 günstige Strömungsverteilung im Innenraum 13 des Gehäuses 10 ermöglicht.

Fig. 5 zeigt das als Lippendichtung 364 ausgestaltete Einspannende 360 der schlauchförmigen Membran 36. Ein an deren Innenseite hochsteigendes, unter Druck stehendes Medium dringt dabei in den Keilspalt 365 der Lippendichtung 364 vor. Es ergibt sich dadurch eine besonders sichere Abdichtung gegen ein Austreten des Mediums zwischen Stützhülse 333 und Klemmring 35.

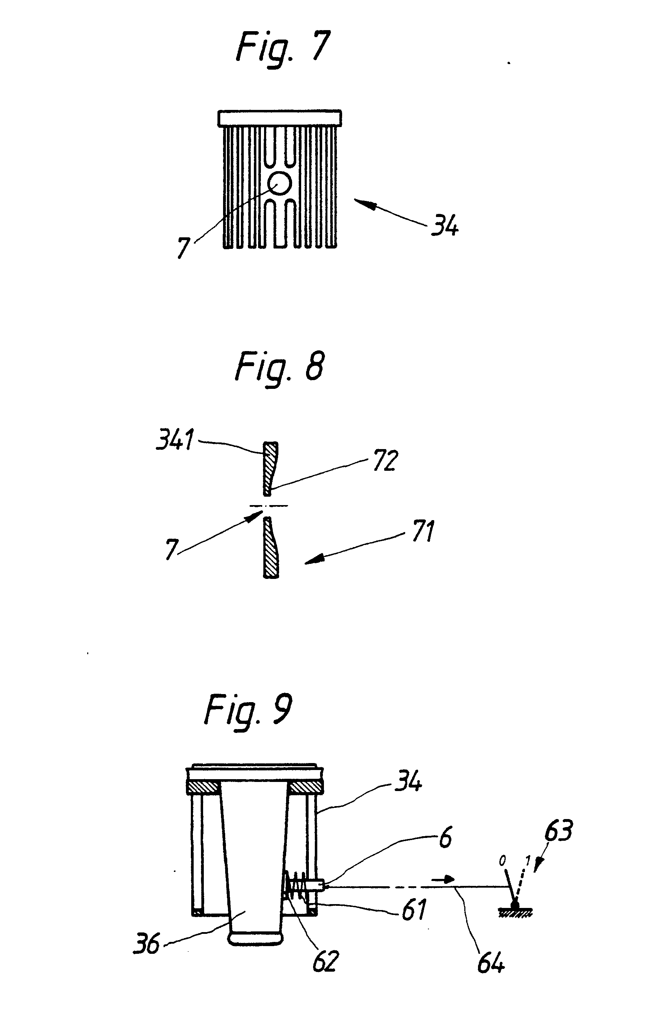

Fig. 7 zeigt einen Schlitzkäfig 34 in erfindungsgemäßer Ausgestaltung mit einer Sichtöffnung 7, durch die die auf der Innenseite des Schlitzkäfigs in der Durchflußstellung anliegende Membran 36 sichtbar ist. Durch eine Farbmarkierung oder lichtreflektierende Mittel auf der Membran 36 kann das Erkennen weiter verbessert werden.

Fig. 8 zeigt einen Schnitt durch den Schlitzkäfig 34 an der Stelle der Sichtöffnung 7. Vorteilhaft ist die der Membran 36 zugewandte Seite 71 im Bereich der Öffnung mit verringerter Wandstärke 72 gezeigt. Die Membran 36 wird näher an die Außenseite des Schlitzkäfigs 34 herangedrückt und dadurch besser sichtbar.

In Fig. 9 ist die Anordnung eines Stellungsanzeigers 6 an der schlauchförmigen Membran 36 gezeigt. Der zylindrische Stellungsanzeiger 6 wird durch den Schlitzkäfig 34 geführt und durch die Membran 36 in axialer Richtung bewegt. Dadurch steht er radial aus dem Schlitzkäfig 34 des Rohrtrenners 1 heraus, wenn sich dieser in Durchflußstellung befindet. Durch den Stellungsanzeiger 6 ist die Stellung der Membran 36 und dadurch auch die Schaltstellung des Rohrtrenners 1 von außen erkennbar. Darüber hinaus können durch den Stellungsanzeiger 6 auch beispielsweise elektrische Schalter bedient werden. Dies kann dazu verwendet werden, den Rohrunterbrecher 1, z.B. elektronisch zu überwachen. Der Stellungsanzeiger 6 wird durch ein elastisches Element 61, das sich am Schlitzkäfig 34 einerseits und an der tellerförmigen Vergrößerung 62 des Stellungsanzeigers 6 anderrerseits abstützt, der Membran 36 zugestellt, so daß er deren Bewegungen in beiden Richtungen folgt. Es ist aber auch möglich, Stellungsanzeiger 6 und Membran 36 können auch aus einem Stück gefertigt sein oder beispielsweise miteinander verklebt sein, wodurch sich das elastische Element 61 erübrigen würde.

An den Stellungsanzeiger 6 ist ein Gestänge 64 angebracht, über das die Position des Stellungsanzeigers 6 an eine Anzeige 63 übertragen wird und an dieser ablesbar ist. Als Anzeige können an Stelle der gezeigten mechanischen auch elektrische und elektronische Mittel in bekannter Weise verwendet werden.

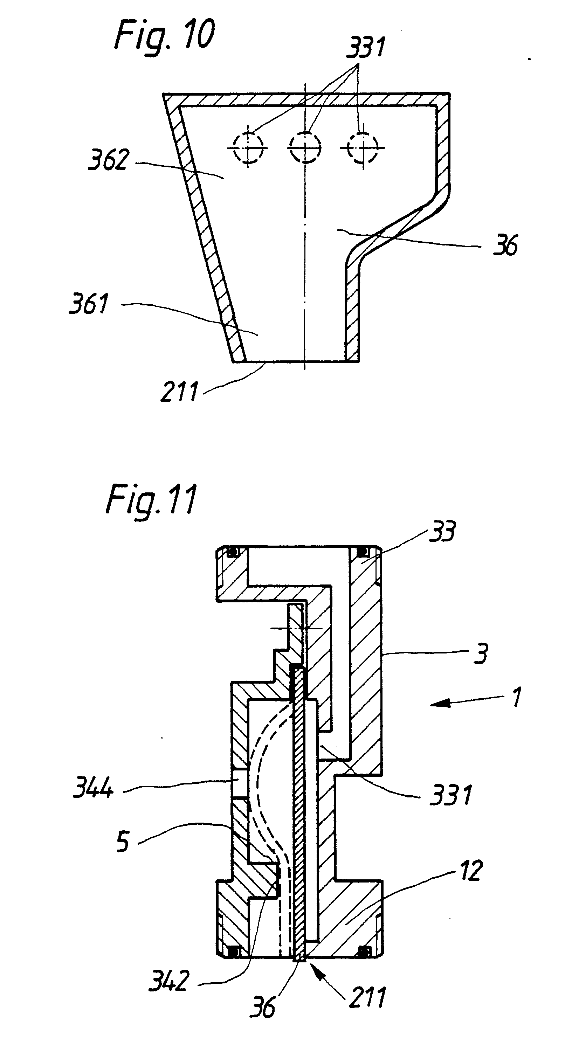

Fig. 10 zeigt einen Schnitt durch einen Einsatz 3 eines Rohrtrenners 1 mit einer flächig ausgebildeten Membran 36. Das über den Zuflußstutzen 33 einfließende Wasser gelangt über die Zuflußöffnung 331 an die Membran 36. Diese wird bei entsprechendem Mediumdruck in ihrem zuflußseitigen Abschnitt 362 zuerst aufgeweitet. Dies erfolgt deshalb, weil der Dehnungswiderstand der Membran 36 aufgrund ihrer in Fig. 11 gezeigten geometrischen Ausgestaltung im zuflußseitigen Abschnitt 362 geringer ist als im Bereich der Austrittsöffnung 211. Die Membran 36 legt sich dabei an die Lufteintrittsöffnung 344 an und verschließt diese. Bevor die Austrittsöffnung 211 geöffnet wird, legt sich die Membran 36 im Bereich des verringerten Abstandes 5 an die Wand 342. Dadurch wird, wie oben bereits beschrieben, die Membran dichtend angedrückt. Um den unterschiedlichen Dehungswiderstand sicher zu gewährleisten wird die Membran 36 im Bereich der Austrittsöffnung 211 quer zur Durchflußrichtung des Mediums über die seitliche Befestigung vorgespannt. Dies ist besonders günstig dann, wenn im Bereich der Austrittsöffnung 211 die Membran 36 bogenförmig aufliegt, so daß eine Vorspannung der Membran 36 quer zur Durchflußrichtung sicher bewirkt, daß die Membran auf ihre Auflage aufgedrückt wird. Fig. 11 zeigt in gestrichelten Linien die Membran 36 in Durchflußstellung.

Fig. 11 stellt eine Membran 36 in flächiger Ausbildung dar. Die linke Hälfte von Fig. 11 zeigt eine Membran 36, deren Ausdehnung sich vom zuflußseitigen Abschnitt 362 zum abflußseitigen Abschnitt 361 hin gleichmäßig verringert. In der rechten Hälfte von Fig. 11 erfolgt eine sprunghafte Veränderung der Ausdehnung der Membran. Im Bereich der Schraffur ist die Membran 36 in ihrem Einsatz 3 befestigt, z.B. verklemmt. Im Bereich des zuflußseitigen Abschnitts 362 sind die Zuflußöffnungen 331 angeordnet. Durch die Austrittsöffnung 211 verläßt das Wasser den Bereich der Membran 36 und strömt in den Ablaufstutzen 12.

Fig. 2 zeigt den in Fig. 1 dargestellten Rohrunterbrecher 1 bei einer Anordnung unter Putz. Das Gehäuse 10 weist quer zur Durchflußrichtung (Pfeil 2) auf seiner dem Boden 14 abgewandten Seite einen Rohrstutzen 15 auf, in welchen direkt oder unter Zwischenschaltung einer Verlängerungshülse 16 eine Abdeckkappe 4 eingeschoben werden kann.

Das Gehäuse 10 bildet einen Innenraum 13, der beispielsweise aus senkrecht aufeinander stehenden, ebenen Flächen bestehen kann. In den Fig. 1 bis 3 ist eine vorteilhafte Ausführung des Gehäuses 10 dargestellt. Dieses ist mit einem quer zur Durchflußrichtung angeordneten, zylindrischen Innenraum 13 ausgestattet. Auf der einen Seite ist der Innenraum 13 durch den Boden 14 abgeschlossen. Auf der anderen Seite ist die Öffnung 170 angeordnet. Diese bildet bei der in Fig. 2 gezeigten Ausführung sowohl die Öffnung für den Luftzutritt als auch die Ein- und Ausbauöffnung für den Einsatz 3. An die Öffnung 170 schließt sich der Rohrstutzen 15 an. In den Rohrstutzen 15 kann direkt oder wie in Fig. 2 gezeigt, über eine Verlängerungshülse 16 eine Abdeckkappe 4 eingeschoben werden.

Die Verlängerungshülse 16 besitzt einen ersten Längenabschnitt 160 mit einem derartigen Innendurchmesser, daß er auf den Rohrstutzen 15 des Gehäuses 10 aufgeschoben werden kann. Der Rohrstutzen besitzt in seiner Außenumfangswand eine Ringnut 150, in welche ein in der Innenumfangswand des Längenabschnittes 160 der Verlängerungshülse 16 vorgesehener Ringsteg 161 in Eingriff gebracht werden kann.

An den Längenabschnitt 160 der Verlängerungshülse 16 schließt sich ein zweiter Längenabschnitt 162 an, dessen Innendurchmesser genau mit dem Innendurchmesser des Rohrstutzens 15 des Gehäuses 10 übereinstimmt. Dies ist die Voraussetzung dafür, daß die Abdeckkappe 4 wahlweise in den Rohrstutzen 15 oder in die Verlängerungshüse 16 eingeschoben werden kann. Der Längenabschnitt 162 der Verlängerungshülse 16 besitzt in seiner Außenumfangswand eine oder mehrere Ringnuten 163. Hierdurch ist es möglich, zum Ausgleich unterschiedlicher Wandstärken auf den Längenabschnitt 162 der Verlängerungshülse 16 eine weitere Verlängerungshülse 16 mit ihrem Längenabschnitt 160 aufzuschieben, wobei durch das Ineinandergreifen eines Ringsteges 161 und einer Ringnut 163 eine axiale Fixierung der beiden Verlängerungshülsen 16 zueinander sichergestellt wird.

Die Abdeckkappe 4 besitzt eine Hülse 40, die in den Rohrstutzen 15 bzw. in die Verlängerungshülse 16 eingeschoben werden kann und damit der Verbindung von Gehäuse 10 und Abdeckkappe 4 dient. Diese Hülse 40 ragt über die eigentliche Abdeckkappe 4 in axialer Richtung hinaus und weist im Inneren der Abdeckkappe 4 ringförmig angeordnete Belüftungsöffnungen 41 auf, die durch Stege 42 voneinander getrennt sind. Um sicherzustellen, daß die Hülse 40 nicht zu weit in den Rohrstutzen 15 bzw. in die Verlängerungshülse 16 hineingeschoben werden kann, besitzen die Stege 42 zwischen den Belüftungsöffnungen 41 einen Außenumfang, der größer als der Außenumfang der Hülse 40 in ihrem Bereich innerhalb des Rohrstutzens 15 bzw. der Verlängerungshülse 16 ist, wobei der Durchmesserübergang sprunghaft erfolgt. Die dem Gehäuse 10 zugewandten Enden der Stege 42 bilden somit zusammen mit dem der Abdeckkappe 4 zugewandten Ende des Rohrstutzens 15 bzw. der Verlängerungshülse 16 zusammenarbeitende Anschläge. Die Anschlagschulter 532 kann dabei mit einem der beiden freien Stirnenden 171, 184 zusammenarbeiten. Auf diese Weise wird sichergestellt, daß die Belüftungsöffnungen 41 auch bei einer Montage durch Laien nicht unabsichtlich ganz oder teilweise verschlossen werden können, so daß stets eine sichere, einwandfreie Funktion des Rohrunterbrechers 1 gewährleistet ist. Die Belüftungsöffnungen 41 werden von einem Ringraum 43 in der Abdeckkappe 4 umgeben, welcher über eine Öffnung 44 mit der Atmosphäre in Verbindung steht.

Das Gehäuse 10 bildet mit seiner Oberfläche des Innenraumes 13 den Sitz der Ringdichtungen 30 und 31 des Einsatzes 3. Die Dichtflächen des Einsatzes 3 haben dabei die räumliche Gestalt entsprechend einer Durchdringungslinie zweier sich senkrecht durchdringenden dünnwandigen Zylinder mit wesentlich verschiedenen Durchmessern. Da der Einsatz vorzugsweise ein Spritzteil aus Kunststoff ist, bedingt die Kompliziertheit der Form praktisch kein fertigungstechnisches Problem. Der Durchmesser der Öffnung 170 entspricht dem Durchmesser des Innenraumes 10, so daß beide günstig und in einem Arbeitsgang hervorzustellen sind und außerdem der Einsatz 3 durch diese Öffnung 170 hindurch aus- bzw. eingeschaltet werden kann. Um ein sicheres Arbeiten des Rohrtrenners zu gewährleisten, muß die Membran 30 des Einsatzes 3 von Zeit zu Zeit ausgewechselt werden. Dies ist notwendig, weil die Membran durch ihre spezifische, bereits oben beschriebene Arbeitsweise hohen Belastungen und daher einem gewissen Verschleiß ausgesetzt ist.

Durch das Gehäuse 14 und dessen günstig ausgestalteten Innenraum 13 wird aber nicht nur die notwendige Austauschbarkeit von Einsätzen für Rohrtrenner erreicht. Es ist vielmehr auch möglich, andere Armaturen mit entsprechend ausgebildeten Gehäusen und Dichtflächen, z.B. Drosseln, Schaugläser, Schmutzsiebe und auch Absperrventile oder Auslaufstutzen in demselben Gehäuse anzuordnen. Durch die besondere räumliche Gestalt der mit dem Gehäuse 10 zusammenarbeitenden Dichtflächen kann der Einsatz 3 nicht um seine der Durchflußrichtung entsprechende Achse gedreht werden. Zur Unterstützung ist jedoch als Drehsicherung ein Ansatz 32 am Einsatz 3 vorgesehen, der vor allen Dingen dann notwendig wird, wenn das Gehäuse 10 über ebene Dichtflächen mit dem Einsatz 3 zusammenwirkt. Der Ansatz 32 arbeitet mit der Ausnehmung 140 des Gehäuses 10 zusammen. Beispielsweise über einen Sicherungsring, der mit einer Nut des Rohrstutzens 15 zusammenwirkt, kann nötigenfalls der Einsatz 3 zusätzlich quer zur Durchflußrichtung gegen Verschieben gesichert werden.

Die vorstehende Beschreibung zeigt, daß der Rohrunterbrecher 1 auf vielfältige Weise abgewandelt werden kann, insbesondere durch Austausch von Merkmalen durch Äquivalente oder durch andere Kombinationen hiervon. So ist es nicht unbedingt erforderlich, daß der Rohrunterbrecher unter Putz angeordnet wird, obwohl er für eine solche Montage ganz besonders gut geeignet ist. Er kann somit in Verbindung mit einer Abdeckkappe 4 ohne Zwischenschaltung von Verlängerungshülsen 18 Anwendung finden und ebeno bei verschiedenen Wandstärken. Aber auch bei Verwendung einer Abdeckung 14 ist eine Unterputzmontage selbst bei unterschiedlichen Wandstärken durch Zwischenschaltung von Verlängerungshülsen 19 möglich, ohne daß hierdurch auf die einfache Austauschbarkeit des Einsatzes 3 verzichtet werden muß.

## Patentansprüche

1. Rohrunterbrecher (1) mit einem Gehäuse (10) und mit einem mit der Zuflußseite in Verbindung stehenden Zuflußstutzen (33, 333), der Zuflußöffnungen (331) aufweist, mit Lufteintrittsöffnungen (344), die mit der Abflußseite in Verbindung stehen sowie mit einer Membran (36), die in Abhängigkeit vom Druckunterschied zwischen Zufluß- und Abflußseite die Lufteintrittsöffnungen (344) verschließt oder freigibt und den Durchfluß steuert, daß die Membran (36) zwei Abschnitte (362, 361) mit unterschiedlichem Dehnungswiderstand aufweist, von denen der zuflußseitige Abschnitt (362) bis über die Lufteintrittsöffnungen (344) hinausreicht und der sich abflußseitig daran anschließende Abschnitt (361) im Vergleich zum zuflußseitigen Abschnitt (362) einen erhöhten Dehnungswiderstand aufweist, **dadurch gekennzeichnet,** daß die Membran (36) mit ihrem einen erhöhten Dehnungswiderstand aufweisenden Abschnitt (361) dichtend gegen das zufließende Medium am Zuflußstutzen (33, 333) anliegt, so daß der Durchfluß erst freigegeben wird, wenn die Lufteintrittsöffnungen (344) verschlossen sind.

2. Rohrunterbrecher nach Anspruch 1, **dadurch gekennzeichnet,** daß im zuflußseitigen Abschnitt (362) die Membran (36) eine größere Ausdehnung quer zur Durchflußrichtung eines Mediums besitzt als im abflußseitigen Abschnitt (361).

3. Rohrunterbrecher nach Anspruch 2, **dadurch gekennzeichnet,** daß die Membran (36) in Durchflußrichtung eine gleichmäßig abnehmende Ausdehung quer zur Durchflußrichtung des Mediums besitzt.

4. Rohrunterbrecher nach einem oder mehreren der Ansprüche 1 bis 3, **dadurch gekennzeichnet,** daß die Membran (36) in ihrem abflußseitigen Abschnitt (361) eine größere Wandstärke (S) als in ihrem zuflußseitigen Abschnitt (362) aufweist.

5. Rohrunterbrecher nach Anspruch 4, **dadurch gekennzeichnet,** daß der abflußseitige Abschnitt (361) der Membran eine sich quer zur Durchflußrichtung des Mediums erstreckende Wulst (363) trägt.

6. Rohrunterbrecher nach einem oder mehreren der Ansprüche 1 bis 5, **dadurch gekennzeichnet,** daß der Druckverlust des den Rohrunterbrecher (1) durchfließenden Mediums durch die Membran (36) auf eine bestimmte Druckdifferenz zwischen den Drücken in der Zuflußleitung (20) und in der Abflußleitung (21) einstellbar ist.

7. Rohrunterbrecher nach einem oder mehreren der Ansprüche 1 bis 6, **dadurch gekennzeichnet,** daß die Druckdifferenz zwischen den während des Mediumdurchflusses in der Zuflußleitung (20) und Abflußleitung (21) herrschenden Drücken nach einem Absperren der Abflußleitung (21) erhalten bleibt und die Lufteintrittsöffnungen (344) und die Austrittsöffnung (211) verschlossen sind.

8. Rohrunterbrecher nach einem oder mehreren der Ansprüche 1 bis 7, **dadurch gekennzeichnet,** daß die der Membran (36) gegenüberliegende Wand (342) zwischen den Lufteintrittsöffnungen (344) und dem abflußseitigen Abschnitt (361) der Membran (36) in Durchflußrichtung eine Verringerung ihres Abstandes (5, 51) zur Membran (36) erfährt.

9. Rohrunterbrecher nach Anspruch 8, **dadurch gekennzeichnet,** daß die Verringerung des Abstandes (5, 51) sprungartig erfolgt.

10. Rohrunterbrecher nach Anspruch 8 oder 9, **dadurch gekennzeichnet,** daß die Verringerung des Abstandes (5, 51) und die Wandstärke der Membran (36) so aufeinander abgestimmt sind, daß in Durchflußstellung im Bereich des größeren Abstandes der Wand (342) die Membran (36) mit ihrer der Wand (342) abgewandten Seite weiter aufgeweitet ist als im Bereich des kleineren Abstandes die der Wand (342) zugewandte Seite der Membran (36).

11. Rohrunterbrecher nach einem oder mehreren der Ansprüche 1 bis 10, **dadurch gekennzeichnet,** daß die Lufteintrittsöffnungen (344) als durch Stege (341) voneinander getrennte Schlitze einer die Membran (36) abstützenden Wand (342) ausgebildet sind.

12. Rohrunterbrecher nach einem oder mehreren der Ansprüche 1 bis 11, **dadurch gekennzeichnet,** daß die Membran (36) schlauchförmig ausgebildet ist.

13. Rohrunterbrecher nach Anspruch 12, **dadurch gekennzeichnet,** daß der Zuflußstutzen (33) die schlauchförmige Membran (36) sowie die den Zuflußstutzen (33) konzentrisch umgebende Wand (342) zusammen einen austauschbaren Einsatz (3) bilden.

14. Rohrunterbrecher nach Anspruch 13, **dadurch gekennzeichnet,** daß der Einsatz (3) und das Gehäuse (10) zusammenarbeitende Anschläge (32, 140) als Drehsicherung aufweisen.

15. Rohrunterbrecher nach Anspruch 13 oder 14, **dadurch gekennzeichnet,** daß der Einsatz (3) aus Kunststoff besteht.

16. Rohrunterbrecher nach einem oder meheren der Ansprüche 12 bis 15, **dadurch gekennzeichnet,** daß die Lufteintrittsöffnungen (344) als durch Stege (341) voneinander getrennte Schlitze eines die schlauchförmige Membran (36) umgebenden Schlitzkäfigs (34) ausgebildet ist.

17. Rohrunterbrecher nach Anspruch 16, **dadurch gekennzeichnet,** daß der Schlitzkäfig (34) in seinem die Stege (341) aufweisenden Bereich einen geringeren Außenumfang aufweist als im Bereich seiner beiden Enden (340, 35).

18. Rohrunterbrecher nach Anspruch 16 oder 17, **dadurch gekennzeichnet,** daß der Zuflußstutzen (33) zuflußseitig eine flanschartige Erweiterung (332) trägt, auf welche der Schlitzkäfig (34) aufschiebbar ist, wobei die schlauchförmige Membran (36) mit einem flanschartigen Einspannende (360) zwischen der flanschartigen Erweiterung (332) des Zuflußstutzens (33) und einer Radialwand (350) des Schlitzkäfigs (34) einklemmbar ist.

19. Rohrunterbrecher nach Anspruch 18, **dadurch gekennzeichnet,** daß das flanschartige Einspannende (360) als Lippendichtung (364) ausgebildet ist.

20. Rohrunterbrecher nach einem oder mehreren der Ansprüche 16 bis 19, **dadurch gekennzeichnet,** daß der Schlitzkäfig (34) unterteilt ist in einen Steghalter (340) und einen Klemmring (35) für die schlauchförmige Membran (36).

21. Rohrunterbrecher nach Anspruch 20, **dadurch gekennzeichnet,** daß der Klemmring (35) auf seiner dem Steghalter (340) zugewandten Seite eine Ringnut (351) aufweist zur Aufnahme der die Lufteintrittsöffnungen (344) voneinander trennenden Stege (341).

22. Rohrunterbrecher nach Anspruch 20 oder 21, **dadurch gekennzeichnet,** daß zur Abstützung der Stege (341) in Umfangsrichtung in der Ringnut (351) gleichmäßig verteilte zahnartige Vorsprünge (353) vorgesehen sind.

23. Rohrunterbrecher nach einem oder mehreren der Ansprüche 16 bis 22, **dadurch gekennzeichnet,** daß die Stege (341) sich in radialer Richtung von außen nach innen verjüngen.

24. Rohrunterbrecher nach einem oder mehreren der Ansprüche 16 bis 23, **dadurch gekennzeichnet,** daß die Stege (341) auf ihrer radial außenliegenden Seite ein abgerundetes Profil (343) aufweisen.

25. Rohrunterbrecher nach einem oder mehreren der Ansprüche 1 bis 24, **dadurch gekennzeichnet,** daß die Schaltstellung des Rohrunterbrechers (1) über die Position der Membran (36) von außen erkennbar ist.

26. Rohrunterbrecher nach Anspruch 25, **dadurch gekennzeichnet,** daß eine Lufteintrittsöffnung (344) als Sichtöffnung (7) zum Erkennen der Schaltstellung der Membran (36) ausgebildet ist.

27. Rohrunterbrecher nach Anspruch 25, **dadurch gekennzeichnet,** daß ein Stellungsanzeiger (6) zum Erkennen der Schaltstellung der Membran (36) dieser zugeordnet ist.

28. Rohrunterbrecher nach Anspruch 27, **dadurch gekennzeichnet,** daß dem Rohrunterbrecher (1) Mittel (63) zum Übertragen der gewonnenen Information über die Schaltstellung des Rohrunterbrechers (1) zugeordnet sind.

29. Rohrunterbrecher nach einem oder mehreren der Ansprüche 1 bis 28, **dadurch gekennzeichnet,** daß das Gehäuse (10) quer zur Durchflußrichtung eine Öffnung (170) aufweist, deren Abmessungen so festgelegt sind, daß der Einsatz (3) durch diese Öffnung (170) hindurch auswechselbar ist.

30. Rohrunterbrecher nach Anspruch 29, **dadurch gekennzeichnet,** daß die Öffnung (170) im Gehäuse (10) zugleich die Belüftungsöffnung bildet.

31. Rohrunterbrecher nach einem oder mehreren der Ansprüche 29 bis 30, **dadurch gekennzeichnet,** daß das Gehäuse (10) einen die Öffnung (170) aufnehmenden Rohrstutzen (17) trägt, an welchem wahlweise eine Verlängerungshülse (16) oder eine Abdeckkappe (4) anschließbar ist.

32. Rohrunterbrecher nach Anspruch 31, **dadurch gekennzeichnet,** daß sowohl der Innenraum (13) des Gehäuses (10) als auch die Belüftungsöffnung (41) im Rohrstutzen (15) Zylinderform aufweisen und koaxial zueinander angeordnet sind, wobei der Innendurchmesser der Öffnung (170) mindestens ebenso groß ist wie der Innendurchmesser des Innenraums (13), und daß der Einsatz (3) sich im wesentlichen quer zur Achse des Innenraumes (13) erstreckt.

33. Rohrunterbrecher nach Anspruch 32, **dadurch gekennzeichnet,** daß der Dichtungssitz des Einsatzes (3) durch die zylindrische Wandung des Innenraumes (13) gebildet wird, der Einsatz (3) an seinen beiden Enden eine der Zylinderform des Innenraumes (13) angepaßte Kontur aufweist und zur Abdichtung gegenüber dem Gehäuse (10) jeweils eine Dichtung (30, 31) trägt.

34. Rohrunterbrecher nach Anspruch 33, **dadurch gekennzeichnet,** daß das Gehäuse (10) auf seiner der Öffnung (170) abgewandten Seite eine Ausnehmung (140) besitzt, die mit dem Ansatz (32) des Einsatzes (3) als Drehsicherung zusammenarbeitet.

35. Rohrunterbrecher nach einem oder mehreren der Ansprüche 31 bis 34, **dadurch gekennzeichnet,** daß die Verlängerungshülse (16) auf ihrem Außenumfang mehrere Ringnuten (163) aufweist, in welche auf dem Innenumfang einer weiteren Verlängerungshülse (16) vorgesehene Ringstege (161) in Eingriff bringbar sind.

36. Rohrunterbrecher nach einem oder mehreren der Ansprüche 31 bis 35, **dadurch gekennzeichnet,** daß die Abdeckkappe (4) eine Hülse (40) aufweist, die mit einem ersten Längenabschnitt (530) in den Rohrstutzen (15) oder in eine Verlängerungshülse (16) einschiebbar ist und in einem zweiten Längenabschnitt (531) mit vergrößertem Außendurchmesser ringförmig verteilt Belüftungsöffnungen (41) aufweist, die das Innere des Rohrstutzen (15) mit der Atmosphäre verbinden, wobei der Durchmesserübergang zwischen erstem und zweitem Längenabschnitt (530, 531) durch eine Anschlagschulter (532) gebildet wird, die zur Anlage an das einen Gegenanschlag bildende freie Stirnende (171, 184) des Rohrstutzens (15) oder der Verlängerungshülse (16) bringbar ist.

## Claims

1. Pipe interrupter (1) with a housing (10) and with a feed nozzle (33, 333) which communicates with the feed side and has feed openings (331), with air inlet openings (344) which communicate with the delivery side and with a diaphragm (36) which closes or vacates the air inlet openings (344) as a function of the pressure difference between feed side and delivery side and controls the through-flow, in that the diaphragm (36) has two portions (362, 361) with different expansion resistance, of which the feed-side portion (362) extends beyond the air inlet openings (344) and the portion (361) adjacent thereto on the delivery side has higher expansion resistance than the feed-side portion (362) characterised in that the diaphragm (36) rests with its portion (361) having higher expansion resistance on the feed nozzle (33, 333), forming a barrier to the entering medium, so that the through-flow is vacated only when the air inlet openings (344) are closed.

2. Pipe interrupter according to claim 1, characterised in that the diaphragm (36) has a greater expanse transversely to the through-flow direction of a medium in the feed-side portion (362) than in the delivery-side portion (361).

3. Pipe interrupter according to claim 2, characterised in that the diaphragm (36) has a uniformly decreasing expanse transversely to the through-flow direction of the medium in the through-flow direction.

4. Pipe interrupter according to one or more of claims 1 to 3, characterised in that the diaphragm (36) has a greater wall thickness (S) in its delivery-side portion (361) than in its feed-side portion (362).

5. Pipe interrupter according to claim 4, characterised in that the delivery-side portion (361) of the diaphragm carries a bead (363) extending transversely to the through-flow direction of the medium.

6. Pipe interrupter according to one or more of claims 1 to 5, characterised in that the pressure loss of the medium flowing through the pipe interrupter (1) can be adjusted by the diaphragm (36) to a specific pressure difference between the pressures in the feed line (20) and in the delivery line (21).

7. Pipe interrupter according to one or more of claims 1 to 6, characterised in that the pressure difference between the pressures prevailing during the through-flow of medium in the feed line (20) and delivery line (21) is maintained after the delivery line (21) has been shut off and the air inlet openings (344) and the outlet opening (211) are closed.

8. Pipe interrupter according to one or more of claims 1 to 7, characterised in that the wall (342) opposite the diaphragm (36) between the air inlet openings (344) and the delivery-side portion (361) of the diaphragm (36) experiences a reduction of its distance (5, 51) from the diaphragm (36) in the through-flow direction.

9. Pipe interrupter according to claim 8, characterised in that the distance (5, 51) is reduced abruptly.

10. Pipe interrupter according to claim 8 or 9, characterised in that the reduction of the distance (5, 51) and the wall thickness of the diaphragm (36) are adapted to one another such that, in the through-flow position, the diaphragm (36) is enlarged further with its side remote from the wall (342) in the region of the greater distance of the wall (342) than the side of the diaphragm (36) facing the wall (342) in the region the smaller distance.

11. Pipe interrupter according to one or more of claims 1 to 10, characterised in that the air inlet openings (344) are constructed as slots, separated from one another by webs (341), of a wall (342) supporting the diaphragm (36).

12. Pipe interrupter according to one or more of claims 1 to 11, characterised in that the diaphragm (36) is constructed in the form of a tube.

13. Pipe interrupter according to claim 12, characterised in that the feed nozzle (33), the tubular diaphragm (36) and the wall (342) concentrically surrounding the feed nozzle (33) together form an exchangeable insert (3).

14. Pipe interrupter according to claim 13, characterised in that the insert (3) and the housing (10) have co-operating stops (32, 140) as rotation-preventing means.

15. Pipe interrupter according to claim 13 or 14, characterised in that the insert (3) consists of plastics material.

16. Pipe interrupter according to one or more of claims 12 to 15, characterised in that the air inlet openings (344) are constructed as slots, separated from one another by webs (341), of a slotted cage (34) surrounding the tubular diaphragm (36).

17. Pipe interrupter according to claim 16, characterised in that the slotted cage (34) has a smaller external periphery in its region having the webs (341) than in the region of its two ends (340, 35).

18. Pipe interrupter according to claim 16 or 17, characterised in that the feed nozzle (33) carries, on the feed side, a flange-like enlargement (332) onto which the slotted cage (34) can be pushed, wherein the tubular diaphragm (36) can be clamped with a flange-like clamping end (360) between the flange-like enlargement (332) of the feed nozzle (33) and a radial wall (350) of the slotted cage (34).

19. Pipe interrupter according to claim 18, characterised in that the flange-like clamping end (360) is constructed as a lip seal (364).

20. Pipe interrupter according to one or more of claims 16 to 19, characterised in that the slotted cage (34) is divided into a web holder (340) and a clamping ring (35) for the tubular diaphragm (36).

21. Pipe interrupter according to claim 20, characterised in that the clamping ring (35) has, on its side facing the web holder (340), an annular groove (351) for receiving the webs (341) separating the air inlet openings (344) from one another.

22. Pipe interrupter according to claim 20 or 21, characterised in that tooth-like projections (353) distributed uniformly in the peripheral direction in the annular groove (351) are provided for supporting the webs (341).

23. Pipe interrupter according to one or more of claims 16 to 22, characterised in that the webs (341) taper from the exterior inwardly in a radial direction.

24. Pipe interrupter according to one or more of claims 16 to 23, characterised in that the webs (341) have a rounded profile (343) on their radially outer side.

25. Pipe interrupter according to one or more of claims 1 to 24, characterised in that the switch position of the pipe interrupter (1) can be discerned from the exterior by the position of the diaphragm (36).

26. Pipe interrupter according to claim 25, characterised in that an air inlet opening (344) is constructed as an inspection opening (7) for discerning the switch position of the diaphragm (36).

27. Pipe interrupter according to claim 25, characterised in that a position display (6) for discerning the switch position of the diaphragm (36) is allocated to the diaphragm.

28. Pipe interrupter according to claim 27, characterised in that the pipe interrupter (1) is allocated means (63) for transmitting the information obtained about the switch position of the pipe interrupter (1).

29. Pipe interrupter according to one or more of claims 1 to 28, characterised in that the housing (10) has an opening (170) transversely to the through-flow direction, of which the dimensions are determined such that the insert (3) can be exchanged through this opening (170).

30. Pipe interrupter according to claim 29, characterised in that the opening (170) in the housing (10) simultaneously forms the ventilation opening.

31. Pipe interrupter according to one or more of claims 29 to 30, characterised in that the housing (10) carries a length of pipe (17) which receives the opening (170) and on which an extension sleeve (16) or a cap (4) can be attached selectively.

32. Pipe interrupter according to claim 31, characterised in that the internal chamber (13) of the housing (10) as well as the ventilation opening (41) in the length of pipe (15) have a cylindrical shape and are arranged coaxially to one another, the internal diameter of the opening (170) being at least as great as the internal diameter of the internal chamber (13) and in that the insert (3) extends substantially transversely to the axis of the internal chamber (13).

33. Pipe interrupter according to claim 32, characterised in that the sealing seating of the insert (3) is formed by the cylindrical wall of the internal chamber (13), the insert (3) has, at its two ends, a contour adapted to the cylindrical shape of the internal chamber (13) and, to produce a seal from the housing (10), carries a respective seal (30, 31).

34. Pipe interrupter according to claim 33, characterised in that the housing (10) has, on its side remote from the opening (170), a recess (140) which co-operates with the protrusion (32) of the insert (3) as a rotation-preventing means.

35. Pipe interrupter according to one or more of claims 31 to 34, characterised in that the extension sleeve (16) has, on its external periphery, several annular grooves (163) into which annular webs (161) provided on the internal periphery of a further extension sleeve (16) can be caused to engage.

36. Pipe interrupter according to one or more of claims 31 to 35, characterised in that the cap (4) has a sleeve (40) which can be inserted with a first longitudinal portion (530) into the length of pipe (15) or into an extension sleeve (16) and, in a second longitudinal portion (531) with an enlarged external diameter, has annularly distributed ventilation openings (41) which connect the interior of the length of pipe (15) with the atmosphere, the diameter transition between first and second longitudinal portion (530, 531) being formed by a stop shoulder (532) which can be brought to rest on the free face end (171, 184), forming a counterstop, of the length of pipe (15) or of the extension sleeve (16).

**Revendications**

1. Déconnecteur de tuyau (interrupteur d'écoulement) (1), comportant un boîtier (10) et un raccord d'entrée (33, 333) qui communique avec le côté d'amont et comporte des ouvertures d'entrée (331) ; des ouvertures (344) d'entrée d'air qui communiquent avec le côté d'aval, ainsi qu'une membrane (36) qui, en fonction de la différence des pressions entre les côtés d'amont et d'aval, obture ou dégage ces ouvertures (344) d'entrée d'air et règle le passage du fluide, cette membrane (36) comportant deux tronçons (361 ; 362) qui ont des résistances à l'allongement différentes, le tronçon d'amont (362) passant au-delà des ouvertures (344) d'entrée d'air et le tronçon d'aval (361) qui s'y raccorde ayant une résistance à l'allongement plus grande que ce tronçon d'amont (362), déconnecteur ou interrupteur d'écoulement caractérisé en ce que le tronçon (361) de la membrane (36), qui a la plus grande résistance à l'allongement, s'applique de manière étanche contre le raccord d'entrée (33, 333) en s'opposant à l'arrivée du fluide, de façon que ce fluide ne puisse passer que lorsque les ouvertures (344) d'entrée d'air sont obturées.

2. Interrupteur d'écoulement selon la revendication 1, caractérisé en ce que le tronçon d'amont (362) de la membrane (36) a un plus grand allongement, perpendiculairement au sens de passage d'un fluide que le tronçon d'aval (361).

3. Interrupteur d'écoulement selon la revendication 2, caractérisé en ce que l'allongement de la membrane (36), perpendiculairement au sens de passage du fluide, diminue uniformément dans le sens de ce passage.

4. Interrupteur d'écoulement selon une ou plusieurs des revendications 1 à 3, caractérisé en ce que la membrane (36)a une paroi(s) plus épaisse, dans son tronçon d'aval (361) que dans son tronçon d'amont (362).

5. Interrupteur d'écoulement selon la revendication 4, caractérisé en ce que le tronçon d'aval (361) de la membrane (36) porte un bourrelet (363), qui se prolonge perpendiculairement au sens de passage.

6. Interrupteur d'écoulement selon l'une ou plusieurs des revendications 1 à 5, caractérisé en ce que la membrane (36) permet d'ajuster la perte de charge du fluide qui passe dans cet interrupteur d'écoulement (1) à une différence déterminée entre les pressions régnant dans la conduite (20) d'arrivée et dans la conduite (21) de sortie.

7. Interrupteur d'écoulement selon une ou plusieurs des revendications 1 à 6, caractérisé en ce que la différence de pressions, entre les pressions qui règnent pendant le passage du fluide, dans la conduite (20) d'entrée et dans la conduite (21) de sortie, subsiste lorsque cette conduite (21) de sortie a été obturée et que les ouvertures (344) d'entrée d'air et l'orifice (211) de sortie sont obturés.

8. Interrupteur d'écoulement selon une ou plusieurs des revendications 1 à 7, caractérisé en ce que la distance (5, 51), par rapport à la membrane (36), de la paroi (342) qui fait vis-à-vis à cette membrane (36), diminue, dans le sens du passage, entre les ouvertures (344) d'entrée d'air et le tronçon d'aval (361) de ladite membrane.

9. Interrupteur d'écoulement selon la revendication 8, caractérisé en ce que la réduction de la distance (5, 51) est brusque.

10. Interrupteur d'écoulement selon la revendication 8 ou 9, caractérisé en ce que la réduction de distance (5, 51) et l'épaisseur de la paroi de la membrane (36) sont accordées entre elles de façon que, en position de passage du fluide, le côté de cette membrane (36) opposé à la paroi (342) soit plus étiré à hauteur de la plus grande distance à cette paroi (342) que le côté de ladite membrane (36) qui fait vis-à-vis à ladite paroi (342) à hauteur de la plus faible distance.

11. Interrupteur d'écoulement selon une ou plusieurs des revendications 1 à 10, caractérisé en ce que les ouvertures (344) d'entrée d'air sont des fentes, séparées les unes des autres par des barreaux (341) d'une paroi (342) qui soutient la membrane (36).

12. Interrupteur d'écoulement selon une ou plusieurs des revendications 1 à 11, caractérisé en ce que la membrane (36) a la forme d'un boyau.

13. Interrupteur d'écoulement selon la revendication 12, caractérisé en ce que le raccord d'entrée (33), la membrane (36) en forme de boyau, ainsi que la paroi (342) qui entoure concentriquement ce raccord d'entrée (33), forment ensemble une garniture (3) remplaçable.

14. Interrupteur d'écoulement selon la revendication 13, caractérisé en ce que la garniture (3) remplaçable et le boîtier (10) comportent des butées (32, 140) qui coopèrent pour empêcher sûrement une rotation.

15. Interrupteur d'écoulement selon la revendication 13 ou 14, caractérisé en ce que la garniture (3) remplaçable est en matière plastique.

16. Interrupteur d'écoulement selon une ou plusieurs des revendications 12 à 15, caractérisé en ce que les ouvertures (344) d'entrée d'air sont des fentes, séparées par des barreaux (341) d'une cage (34) à fentes, qui entoure la membrane (36) en forme de boyau.

17. Interrupteur d'écoulement selon la revendication 16, caractérisé en ce que, dans sa partie qui comporte des barreaux (341), la cage (34) à fentes a une périphérie extérieure plus petite qu'à ses deux extrémités (340, 35).

18. Interrupteur d'écoulement selon la revendication 16 ou 17, caractérisé en ce que le raccord d'entrée (33) comporte, du côté d'amont, une partie (332) élargie en collerette, sur laquelle la cage (34) à fentes peut être glissée, l'extrémité (360) d'encastrement, en forme de collerette, de la membrane (36) en forme de boyau pouvant être serrée entre cette partie (332) élargie en collerette du raccord d'entrée (33) et une paroi radiale (350) de la cage (34) à fentes.

19. Interrupteur d'écoulement selon la revendication 18, caractérisé en ce que l'extrémité (360) d'encastrement, en forme de collerette, a la configuration d'un joint (364) à lèvre.

20. Interrupteur d'écoulement selon une ou plusieurs des revendications 16 à 19, caractérisé en ce que la cage (34) à fentes est subdivisée en un support (340) des barreaux et une couronne (35) de serrage de la membrane(36) en forme de boyau.

21. Interrupteur d'écoulement selon la revendication 20, caractérisé en ce que la couronne (35) de serrage présente sur son côté tourné vers le support (340) de barreaux, une gorge annulaire (351) destinée à loger les barreaux (341) qui séparent les unes des autres les ouvertures (344) d'entrée d'air.

22. Interrupteur d'écoulement selon la revendication 20 ou 21, caractérisé en ce que, pour étayer les barreaux (341) dans le sens de la périphérie, des saillies (353), en forme de dents réparties régulièrement, sont ménagées dans la gorge annulaire (351).

23. Interrupteur d'écoulement selon une ou plusieurs des revendications 16 à 22, caractérisé en ce que les barreaux (341) s'amincissent de l'extérieur vers l'intérieur dans le sens radial.

24. Interrupteur d'écoulement selon une ou plusieurs des revendications 16 à 23, caractérisé en ce que les barreaux (341) ont un profil (343) arrondi sur leur côté radialement extérieur.

25. Interrupteur d'écoulement selon une ou plusieurs des revendications 1 à 24, caractérisé en ce que la position de fonctionnement de cet interrupteur (1) d'écoulement peut être décelée de l'extérieur par l'entremise de la position de la membrane (36).

26. Interrupteur d'écoulement selon la revendication 25, caractérisé en ce qu'une ouverture (344) d'entrée d'air est conformée pour jouer le rôle d'un regard (7) permettant de déceler la position de fonctionnement de la membrane (36).

27. Interrupteur d'écoulement selon la revendication 25, caractérisé en ce qu'un indicateur (6) de position destiné à permettre de déceler la position de fonctionnement de la membrane (36) est associé à celle-ci.

28. Interrupteur d'écoulement selon la revendication 27, caractérisé en ce qu'un dispositif (63), destiné à transmettre le renseignement recueilli concernant la position de fonctionnement de cet interrupteur (1) d'écoulement, est associé à ce dernier.

29. Interrupteur d'écoulement selon une ou plusieurs des revendications 1 à 28, caractérisé en ce que le boîtier (10) comporte, perpendiculairement au sens de passage du fluide, une ouverture (170) dont les dimensions sont établies de façon que la garniture (3) puisse être remplacée en passant par cette ouverture (170).

30. Interrupteur d'écoulement selon la revendication 29, caractérisé en ce que l'ouverture (170) du boîtier (10) constitue également l'ouverture d'aération.

31. Interrupteur d'écoulement selon la revendication 29 ou 20, caractérisé en ce que le boîtier (10) porte un raccord tubulaire (15), qui loge l'ouverture (170) et auquel peut être raccordé à volonté une douille (16) de rallonge ou un capuchon (4).

32. Interrupteur d'écoulement selon la revendication 31, caractérisé en ce que la chambre (13) du boîtier (10) et les ouvertures (41) d'aération du raccord tubulaire (15) ont une forme cylindrique et sont coaxiales, le diamètre intérieur de l'ouverture (170) étant au moins aussi grand que le diamètre intérieur de cette chambre (13), et en ce que la garniture (3) s'étend dans une direction sensiblement perpendiculaire à l'axe de ladite chambre (13).

33. Interrupteur d'écoulement selon la revendication 32, caractérisé en ce que le siège des joints d'étanchéité de la garniture (3) est constitué par la paroi cylindrique de la chambre (13); cette garniture (3) présente à ses deux extrémités un contour adapté à la forme cylindrique de cette chambre (13) et porte à chacune de ses extrémités un joint (30, 31) respectif destiné à réaliser l'étanchéité par rapport au boîtier (10).

34. Interrupteur d'écoulement selon la revendication 33, caractérisé en ce que le boîtier (10) comporte, du côté opposé à l'ouverture (170), un évidement (140), qui coopère avec le doigt de butée (32) de la garniture (3) de façon à constituer une sécurité empêchant une rotation.

35. Interrupteur d'écoulement selon une ou plusieurs des revendications 31 à 34, caractérisé en ce que la douille (16) de rallonge comporte, sur sa périphérie extérieure, plusieurs gorges annulaires (163), dans lesquelles des nervures annulaires (161) de la surface intérieure d'une autre douille (16) de rallonge peuvent être engagées.

36. Interrupteur d'écoulement selon une ou plusieurs des revendications 31 à 35, caractérisé en ce que le capuchon (4) comporte un manchon (40), dont un premier tronçon longitudinal (530) peut être inséré dans le raccord tubulaire (15) ou dans une douille (16) de rallonge, et dont un second tronçon longitudinal (531), ayant un plus grand diamètre extérieur, comporte des ouvertures (41) d'aération réparties annulairement, qui font communiquer l'intérieur du raccord tubulaire (15) avec l'atmosphère, le passage d'un diamètre à l'autre entre ces premier et second tronçons (530, 531) étant réalisé par un épaulement de butée (532), qui peut être amené en contact avec une extrémité frontale (171, 184) libre, constituant une butée opposée, de ce raccord tubulaire (15) ou de cette douille (16) de rallonge.

Fig.1

Fig. 2

## Fig. 3

a)

b)

*Fig. 4*

*Fig. 5*

## Fig. 6

*Fig. 7*

*Fig. 8*

*Fig. 9*

*Fig. 10*

*Fig.11*